(19)

Europäisches
Patentamt

European
Patent Office

Office européen
des brevets

(11) **EP 4 321 772 B1**

(12) **EUROPEAN PATENT SPECIFICATION**

(45) Date of publication and mention
of the grant of the patent:
**19.02.2025 Bulletin 2025/08**

(51) International Patent Classification (IPC):
**F16H 7/02** (2006.01)     **A61H 3/00** (2006.01)
**B25J 9/00** (2006.01)     **F16H 9/24** (2006.01)

(21) Application number: **22382778.3**

(22) Date of filing: **10.08.2022**

(52) Cooperative Patent Classification (CPC):
**F16H 7/02; A61H 3/00; B25J 9/0006; B25J 9/104;**
**F16H 7/023; F16H 9/24;** A61H 2201/1215;
A61H 2201/1418; A61H 2201/1454;
A61H 2201/1472

(54) **BACKDRIVABLE ACTUATOR FOR EXOSKELETON**

RÜCKFAHRBARER AKTUATOR FÜR EXOSKELETT

ACTIONNEUR RÉTROPILOTABLE POUR EXOSQUELETTE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**14.02.2024 Bulletin 2024/07**

(73) Proprietor: **Able Human Motion, S.L.**
**08042 Barcelona (ES)**

(72) Inventors:
• **MOREY OLIVÉ, Pau**
**08015 Barcelona (ES)**
• **GARCIA FARRENY, Alex**
**08023 Barcelona (ES)**
• **PEDRERO TOBELLA, Guim**
**08028 Barcelona (ES)**

(74) Representative: **Durán-Corretjer, S.L.P.**
**Còrsega, 329**
**(Paseo de Gracia/Diagonal)**
**08037 Barcelona (ES)**

(56) References cited:
**WO-A1-2013/188868**     **WO-A1-2021/030086**
**US-A1- 2018 296 422**

**Description**

FIELD AND BACKGROUND OF THE INVENTION

The present invention, in some embodiments thereof, relates to an actuator and, more particularly, but not exclusively, to a backdrivable actuator for an exoskeleton.

A publication by Jan Babic et al, "Challenges and solutions for application and wider adoption of wearable robots" discloses that the output torque of electric motors is low relative to the demands of wearable robots, which is why they are typically paired with high-reduction gearboxes. The dominant gearbox technologies in wearable robotics, harmonic gears and planetary gearboxes, offer high reduction ratios in compact sizes. However, their low efficiency and poor backdrivability are detrimental to the overall performance of the actuators and the wearable robot as a whole. Two paths are currently followed by the research community to tackle this problem. On one hand, novel gearbox technologies with improved characteristics are being explored. These gearboxes achieve high gear reductions at high efficiencies and in compact sizes through the use of the Wolfrom gearbox topology, combined with performance-enhancing modifications such as a carrierless design (Gear Bearing Drive) and profile shift modification (Bilateral Drive). On the other hand, quasi-direct drive has emerged as a new actuation paradigm. It combines high torque-motors with low-reduction gearboxes, resulting in energy-efficient actuators with high backdrivability. Ideally, these gearboxes are single-stage (gear ratio below 10) since efficiency is mostly related to the number of stages.

A publication by Junlin Wang et al, "Comfort-Centered Design of a Lightweight and Backdrivable Knee Exoskeleton" discloses design principles for comfort-centered wearable robots and their application in a lightweight and backdrivable knee exoskeleton. The mitigation of discomfort is treated as mechanical design and control issues and three solutions are proposed in that publication: 1) a new wearable structure optimizes the strap attachment configuration and suit layout to ameliorate excessive shear forces of conventional wearable structure design; 2) rolling knee joint and double-hinge mechanisms reduce the misalignment in the sagittal and frontal plane, without increasing the mechanical complexity and inertia, respectively; 3) a low impedance mechanical transmission reduces the reflected inertia and damping of the actuator to human, thus the exoskeleton is highly-backdrivable.

A publication by Alejandro F. Azocar et al, "Design and clinical implementation of an open-source bionic leg" discloses a design and clinical implementation of an integrated robotic knee-ankle prosthesis that facilitates the real-world testing of its biomechanics and control strategies. The bionic leg is open source, it includes software for low-level control and for communication with control systems, and its hardware design is customizable, enabling a reduction in its mass and cost, improvement in its ease of use and independent operation of the knee and ankle joints.

A publication by Chang Liu et al, "Functional Evaluation of a Force Sensor-Controlled Upper-Limb Power-Assisted Exoskeleton with High Backdrivability" discloses a study showing a lightweight upper-limb power-assisted exoskeleton with high backdrivability. Additionally, a motion capture system was adopted to measure and analyze the workspace of the wearer's upper limb after the exoskeleton was worn. The results were used to evaluate the exoskeleton's ability to support the wearer's movement. Furthermore, a small and compact three-axis force sensor was used for power assistance, and the effect of the power assistance was evaluated by means of measuring the wearer's surface electromyography, force, and joint angle signals.

A publication by Shuangyue Yu et al, "Quasi-Direct Drive Actuation for a Lightweight Hip Exoskeleton with High Backdrivability and High Bandwidth" discloses a design and human-robot interaction modeling of a portable hip exoskeleton based on their custom quasi-direct drive (QDD) actuation (i.e., a high torque density motor with low ratio gear). They present a model-based performance benchmark comparison of representative actuators in terms of torque capability, control bandwidth, backdrivability, and force tracking accuracy. They created a lightweight bilateral hip exoskeleton to reduce joint loadings during normal activities, including walking and squatting. Experiments indicate that the exoskeleton was able to produce high nominal torque (17.5 Nm), high backdrivability (0.4 Nm backdriving torque), high bandwidth (62.4 Hz), and high control accuracy (1.09 Nm root mean square tracking error, 5.4% of the desired peak torque).

Additional background art includes U.S. Patent No. US10702441B2 disclosing an exoskeleton that includes first and second supports coupled to an exoskeleton wearer, a joint connecting the first support to the second support and an actuator. The actuator includes a ball screw, a ball nut assembly coupled to the ball screw and first and second tensile members. The ball nut assembly has first and second cord reactors. The first tensile member is routed through the first cord reactor, and the second tensile member is routed through the second cord reactor. Movement of the ball nut assembly along the ball screw in a first direction causes the second support to move relative to the first support in a first rotational direction about the joint. Movement of the ball nut assembly along the ball screw in a second direction causes the second support to move relative to the first support in a second rotational direction about the joint.

U.S. Patent Application Publication No. US20210290470A1 disclosing a joint actuator assembly for a legged mobility device which includes a motor that drives a joint connector for driving a joint of the mobility device, and a three-stage transmission of speed reduction to result in a high torque, low speed output. The first stage may include a small sprocket mechanically connected to the output shaft of the motor, and a large sprocket driven by a cable chain to provide the first speed reduction. The second stage may include a small central helical gear mechanically connected to the first stage output, and two opposing larger first and second outer helical gears that mesh with the central gear to provide the second speed reduction. The third stage may include a cable reel assembly including an output reel and a cable element that interconnects the output of the second stage and the output reel to provide the third speed reduction.

U.S. Patent Application Publication No. US20210338515A1 disclosing a joint actuator assembly which includes a motor, a rotating driving member driven by the motor for driving a driven component, and a transmission assembly located between the motor and the rotating driving member that provides speed reduction from the motor to the rotating driving member. The rotating driving member comprises a magnetic coupling including a plurality of magnetic elements that are configured to magnetically couple with an opposing magnetic coupling of the driven component. The actuator and driven component may be combined into a mobility device including a magnetic coupling system having a first magnetic coupling on the actuator that magnetically couples to a second magnetic coupling on the driven component. The magnetic coupling system includes plurality of magnetic elements located as part of one or both of the first and second magnetic couplings. The first and second couplings have opposing mating surfaces that join together in a coupled position.

International Patent Application Publication No. WO2013140390A1 disclosing a motorized exoskeleton device for facilitating locomotion for a user, the device including, a torso base for affixing to the torso of the user, a pair of limb members configured to be coupled to a lower extremity of the user. Each limb member includes, a first support segment and a second support segment, where the first support segment is superior to the second support segment two motorized joints, one of the motorized joints connecting the first support segment to the second support segment and another motorized joint connecting the first support segment to the torso base and two motors configured to move the motorized joints, wherein the motors are coupled to the superior support segment.

U.S. Patent No. US9566705B2 disclosing an exoskeleton for applying force to at least one lower limb of a user that includes a control system with a sensor interface for sensor signals; a power interface for transmitting control signals to the powered joint; a processor coupled to the sensor and the power interfaces; and a computer-readable medium storing a computer program executable on the processor with code sections for: estimating a configuration of a body of the user with respect to a gravity vector based on the sensor signals; computing a control torque for the powered joint that compensates gravitational dynamics of the user based on the configuration; calculating a gravitational energy gradient for the powered joint; attenuating the control torque based on the gravitational energy gradient; computing a final control torque based on the attenuated control torque, and configuring the control signals based on the attenuated control torque.

Japanese Patent No. JP6765989B2 disclosing, in a long lower extremity orthosis, a control device that: calculates a thigh phase angle on the basis of an angle related signal input from thigh attitude detection means at one sampling point; applies the thigh phase angle at the one sampling point to assist force control data pre-stored in the control device and representing a relation between the thigh phase angle and the assist force to be applied to a lower thigh-side orthosis; calculates the assist force to be applied to the lower thigh-side orthosis at the one sampling point; and performs operation control of the actuator such that the assist force is output.

Korean Patent No. KR101724884B1 disclosing a step of deriving a hip joint angle and an angular velocity of a knee joint and a swing leg of a robot supporting leg, a comparison step of comparing values of angles and angular velocities of the support legs and the swing legs with preset reference values of angles and angular velocities, calculating an assist torque value using an angle or an angular velocity derived from the support leg when an angle and an angular velocity of the derived support leg and swing leg satisfy a predetermined reference condition, and a method and system for stair walking control of a wearable robot including application steps applied to a knee joint.

U.S. Patent No. US10213357B2 disclosing an ambulatory exoskeleton that can be selectively operated in at least two different modes, with one mode constituting an unworn propulsion mode, used when the exoskeleton is not worn by a user, and another mode constituting a default or worn propulsion mode, used when the exoskeleton is worn by a user. With this arrangement, a physical therapist, or other operator, wishing to move an unworn exoskeleton, can balance the unworn exoskeleton, while simultaneously utilizing a control system and actuators of the exoskeleton to propel the unworn exoskeleton. Therefore, the exoskeleton walks by taking steps forward, as commanded by the operator using any of a plurality of input arrangements, while the operator balances and steers the exoskeleton by physically guiding the exoskeleton using a handle or other interaction surface of the exoskeleton.

U.S. Patent Application Publication No. US20210085552A1 disclosing a gait motion assisting apparatus including an actuator unit controlling driver so that assisting force calculated by applying gait motion timing based on detected thigh phase angle to output pattern saved data is imparted to lower leg, and a terminal device capable of wireless-communicating with control device of the actuator unit. The terminal device can receive assisting force setting value including assisting force imparting period during gait cycle and create, based on the assisting force setting value, output pattern setting data indicating a relationship between the gait motion timing and a size of assisting force to be imparted to the lower leg. The control device is configured to overwrite-save the output pattern setting data received from the terminal device as the output pattern saved data.

U.S. Patent Application Publication No. US20210275382A1 disclosing a joint actuator assembly which includes a motor, a rotating driving member driven by the motor for driving a driven component, and a transmission assembly located between the motor and the rotating driving member that provides speed reduction from the motor to the rotating driving member. The rotating driving member includes a magnetic/electrical coupling comprising a magnetic coupling component configured to magnetically couple with an opposing magnetic coupling of the driven component, and an electrical element configured to provide an electrical connection to an opposing electrical element of the driven component. The actuator and driven component may be combined into a mobility device including a magnetic/electrical coupling system comprising a first magnetic/electrical coupling on the actuator assembly that magnetically and electrically couples to a second magnetic/electrical coupling on the driven component. The magnetic coupling system includes a plurality of magnetic elements located on the first and/or second magnetic/electrical couplings and opposing electrical elements for electrical connection when the actuator assembly and the driven component are joined together.

U.S. Patent Application Publication No. US20210039248A1 disclosing a motion control system, which includes an actuator having an actuation member, the actuation member having a proximal end attached to the actuator on a first side of a joint and a distal end attached to an anchor element attachment point on a second side of the joint. A first sensor is configured to output signals defining a gait cycle and a second sensor is configured to output signals representing a tensile force in the at least one actuation member. A controller receives the output signals from the first and second sensors and, responsive thereto, automatically actuates the actuator, during a first portion of the gait cycle, to apply a force greater than a predetermined threshold tensile force to the anchor element attachment point via the actuation member to generate a beneficial moment about the joint and to automatically actuate the actuator, during at least a second portion of the gait cycle, to reduce a tensile force at the anchor element attachment point to a level at or below the predetermined threshold tensile force to avoid generating a detrimental moment about the joint.

U.S. Patent Application Publication No. US20200276698A1 disclosing a wearable system comprising an exosuit or exoskeleton; an actuator(s) configured to generate force in the exosuit or exoskeleton; a sensor(s) configured to measure information for evaluating an objective function associated with providing physical assistance to the wearer, an interaction between the wearer and the exosuit or exoskeleton, and/or an operation of the exosuit or exoskeleton; and a controller(s) configured to: actuate the actuator(s) according to an actuation profile(s), evaluate the objective function based on the information measured by the at least one sensor to determine a resulting change in the objective function, adjust a parameter(s) of the actuation profile(s) based on the resulting change in the objective function, and continue to actuate, evaluate, and adjust to optimize the actuation parameter(s) for maximizing or minimizing the objective function. Wearable systems configured to assist or promote an improvement in the wearer's gait and optimized using a gradient descent or Bayesian approach.

International Patent Application Publication No. WO2013188868A1 disclosing an exoskeleton for applying force to at least one lower limb of a user, comprising: a hip segment; a thigh segment coupled to the hip segment by a powered joint; a plurality of sensors associated with the lower limb; and a control system comprising: a sensor interface for receiving sensor signals; a power interface for transmitting control signals to the at least one powered joint; a processor communicatively coupled to the sensor interface and the power interface; and a computer-readable medium having stored thereon a computer program executable on the processor, the computer program comprising a plurality of code sections for: estimating a configuration of a body of the user associated with the exoskeleton with respect to a gravity vector based on the sensor signals at the sensor interface; computing a first control torque for the at least one powered joint that at least partially compensates gravitational dynamics of the user based on the configuration; calculating a gravitational energy gradient for the at least one powered joint; attenuating the first control torque based at least on the gravitational energy gradient to yield a second control torque; computing a final control torque based, at least in part, on the second control torque, and configuring the control signals at the power interface to cause the final control torque to be applied at the at least one powered joint.

U.S. Patent Application Publication No. US2018296422A1 disclosing an actuating device for orthosis including a housing, a motor, a transmission disposed in the housing, and an actuating arm. The transmission is operatively connected to the motor such that the motor provides power to the transmission. The transmission includes a first stage, a second stage, and a third stage. The first stage has a first sprocket, a second sprocket, and a first drive belt tensioned between the first sprocket and the second sprocket. The first sprocket is attached to a shaft of the motor. The second stage has a third sprocket, a fourth sprocket, and a second drive belt tensioned by the third sprocket and the fourth sprocket. The third sprocket is attached to the second sprocket of the first stage. The third stage has a fifth sprocket, a sixth sprocket, and a third drive belt tensioned by the fifth sprocket and the sixth sprocket. The fifth sprocket is attached to the fourth sprocket of the second stage. The transmission additionally includes a first shaft and a second shaft. The second sprocket, the third sprocket, and the sixth sprocket are attached to the first shaft, and the fourth sprocket and the fifth sprocket are attached to the second shaft. The actuating arm is operatively connected to the sixth sprocket of the third stage of the transmission such that the power provided to the transmission by the motor causes the actuating arm to provide an output torque.

International Patent Application Publication No. WO2021030086A1 disclosing an enhanced actuator assembly, such as for use in driving a joint member of a wearable robotic device, is characterized by electrical isolation of the motor from the transmission system output. An actuator assembly includes a motor and a transmission system that provides a speed reduction of a motor speed to an output speed. The transmission system includes a non-conductive material layer that electrically isolates the motor from an output of the transmission system. The transmission system may be a two-stage transmission system. A first stage of speed reduction of the transmission system may include a first rotating member, such as a first helical gear, attached to the output shaft of the motor that transmits power to a second rotating member, such as a second helical gear. The second rotating member has a diameter larger than a diameter of the first rotating member to form the first stage of speed reduction, and the non-conductive material layer is part of the second rotating member.

## SUMMARY OF THE INVENTION

Following is a non-exclusive list including some examples of embodiments of the invention. The invention also includes embodiments which include fewer than all the features in an example and embodiments using features from multiple examples, also if not expressly listed below.

An actuator according to the invention comprising:
the features of claim 1. Further embodiments of the invention are outlined in the dependent claims.

## BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

Figures 1a-1b show a comparison between a layout configuration of a linear-layout actuator (Figure 1a) and an exemplary compacted-layout actuator (Figure 1b), according to some embodiments of the invention;

Figure 2 is a schematic representation of an exemplary two stage reduction actuator, according to some embodiments of the invention;

Figures 3a-3b are schematic representations from both sides of an exemplary actuator with a motor in an exoskeleton use, according to some embodiments of the invention;

Figures 4a-4c are schematic representations of the actuators incorporated within an exoskeleton, according to some embodiments of the invention;

Figures 5a-5c are schematic representations of exemplary exoskeleton comprising the coaxial actuators, according to some embodiments of the invention;

Figure 5d is a schematic representation of an exemplary brake, according to some embodiments of the invention;

Figures 6a-d are schematic representations of an exemplary belt tensioning mechanism, according to some embodiments of the invention;

Figure 7 shows schematic representations of an exemplary configurable thigh segment of an exoskeleton, according to some embodiments of the invention;

Figure 8a is a chart showing exemplary contribution of each element in the calculation of a theoretical backdriving torque without including the inertial contribution to backdriability, according to some embodiments of the invention;

Figure 8b is a graph representing an exemplarly comparison in Houle Power losses between known systems and the present system, according to some embodiments of the invention;

Figure 9 is a schematic representation of an exemplary integration of the exemplary actuator into an exoskeleton, according to some embodiments of the invention;

Figure 10 is a schematic representation of an exemplary beltless actuator, according to some embodiments of the invention;

Figure 11a is a schematic representation of an exemplary use of the exemplary actuator with a Bowden cable system, according to some embodiments of the invention;

Figure 11b is a schematic representation of an exemplary use of the exemplary Bowden cable system in a soft exoskeleton, according to some embodiments of the invention;

Figure 11c is a schematic representation of an exemplary use of the exemplary Bowden cable system in a soft exoskeleton, according to some embodiments of the invention;

Figure 11d is a schematic representation of an exemplary use of the exemplary cable-driven actuator in a rigid exoskeleton, according to some embodiments of the invention;

Figures 12a-12b are schematic representations of exemplary alternative uses of the exemplary actuator, according to some embodiments of the invention;

Figure 13a is an image of an exemplary frameless motor, according to some embodiments of the invention;

Figure 13b is an image of an exemplary test bench, according to some embodiments of the invention;

Figure 13c is a graph showing a result of an exemplary encoder linearity test, according to some embodiments of the invention;

Figure 13d is a graph showing a result of an exemplary torque constant test, according to some embodiments of the invention;

Figure 13e is a graph showing exemplary time constants at each torque, meaning how much time a certain torque can be delivered without overheating/damaging the motor, according to some embodiments of the invention;

Figure 13f are graphs showing the position and current profiles used to command the actuators during the fatigue test, according to some embodiments of the invention;

Figure 13g show exemplary resistance motor characteristics, according to some embodiments of the invention;

Figure 13h shows the main components of the test bench, according to some embodiments of the invention;

Figure 13i are charts showing the position, velocity and current profiles of 12 cycles (1 sitting down, 1 standing up and 10 steps), according to some embodiments of the invention;

Figure 13j shows an image of the actuator uncovered after performing all the fatigue tests, according to some embodiments of the invention;

Figure 13k shows an image of how the timing belt was affected by the teeth jump, according to some embodiments of the invention;

Figure 13l shows the plot of the evolution of the input-output error during the whole fatigue test, according to some embodiments of the invention;

Figure 13m shows a graph showing that the motor was at the most severe working conditions during the fatigue test, according to some embodiments of the invention; and

Figure 13n shows a graph showing that the temperature never reached 100°C which is the maximum operating temperature specified by the manufacturer (T-Motor), according to some embodiments of the invention.

DESCRIPTION OF SPECIFIC EMBODIMENTS OF THE INVENTION

The present invention, in some embodiments thereof, relates to an actuator and, more particularly, but not exclusively, to a backdrivable actuator for an exoskeleton.

Overview

An aspect of some embodiments of the invention relates to a backdrivable actuator comprising a coaxial input-out layout and a combination of a high torque-motor with an efficient low ratio transmission system. In some embodiments, the actuator comprises a 2-stage timing belt transmission embedded in a compact package. In some embodiments, a potential advantage of this configuration is that the backdrivability, the torque and the velocity are not affected by this configuration. In some embodiments, the actuator comprises a tensioning mechanism comprising a compact footprint, which potentially allows tensioning each belt independently and precisely.

In some embodiments, a potential advantage of the actuator of the invention is that by using a backdrivable actuator as disclosed herein, the system is lighter, more compact, cheaper, more efficient and has higher bandwidth compared to the traditional high reduction ratio gearboxes. In some embodiments, this is also achieved by avoiding sub-optimal dynamics of high reduction gearboxes and by potentially avoiding possible delays caused by the addition of sensors within the system. In some embodiments, the actuator of the invention potentially allows for a better human-machine interaction and potentially allows people with incomplete injuries to use the exoskeleton.

In some embodiments, the exoskeleton comprises two silent, high-efficient and backdrivable actuators with about 60 Nm max torque and about 36 Nm nominal torque. In some embodiments, the exoskeleton comprises a knee safety brake of about 36 Nm. In some embodiments, the exoskeleton comprises an improved length regulation mechanism. In some embodiments, the exoskeleton comprises an improved cable routing. In some embodiments, the exoskeleton comprises a closed system, which avoids finger trapping.

An aspect of some embodiments of the invention relates to a backdrivable actuator for a lower-limb exoskeleton. In some embodiments, the manufacturing costs of the actuator are cheaper when compared with known actuators that use high reduction ratios. In some embodiments, the actuator is lighter when compared to known actuators. In some embodiments, the actuator is configured to provide a maximum torque from about 40 Nm/Kg to about 100 Nm/Kg. In some embodiments, a potential advantage of the actuator is that the configuration allows to provide a high torque in a more efficient manner, when compared to other actuators. For example, known planetary gearboxes comprising a T-Motor AK10-9 are configured to provide a torque of about 50 Nm/Kg, while known Harmonic gears comprising a FLA-20A-100CD are configured to provide a torque of about 60 Nm/Kg, with the downside that the known Harmonic gears are not highly backdrivable. In some embodiments, the whole device, including the actuator weights from about 8Kg to about 15 Kg. In some embodiments, the actuator alone weights from about 600 gr to about 800 gr. Optionally from about 500 gr to about 900 gr. Optionally from about 400 gr to about 1.2 Kg. In some embodiments, the actuator is used in an exoskeleton device configured to assist a user in walking, standing up and/or sitting down. In some embodiments, the actuator is configured to establish an ideal torque, velocity and range of motion (ROM) necessary to power these use cases. In some embodiments, the actuator has a lower reduction ratio, when compared to known actuators. In some embodiments, the actuator is configured to provide high torque together with high bandwidths while also being lightweight. In some embodiments, the actuator is configured to provide high backdrivability, when compared to known actuators, meaning, the actuator is configured to be manually moved from the output effortlessly. In some embodiments, a potential advantage of having a high backdrivability is that it potentially improves the implementation of force controls; for example, in this case, the reduction system is as transparent as possible to allow the simplification that the output torque is almost perfectly proportional to the input torque and avoid using a torque sensor.

An aspect of some embodiments of the invention relates to an actuator that provides high torque, comprises high backdrivability, is characterized by a low mass and it is potentially cheaper, when compared with known actuators. In some embodiments, the actuator provides a maximum output torque of about 64 Nm. In some embodiments, the actuator provides a maximum output torque of from about 50 Nm to about 80 Nm, optionally, from about 40 Nm to about 100 Nm. In some embodiments, the actuator provides a maximum output angular velocity of from about 33 min$^{-1}$ to about 100 min$^{-1}$. In some embodiments, the actuator comprises a peak output power of from about 100W to about 750 W. In some embodiments, the high backdrivability is allowed due to a provision of a high torque-motor combined with a low-reduction-ratio gearbox, which comprises a high efficiency transmission mechanism of from about 90% to about 98%. In some embodiments, the high torque-motors are brushless motors with a high number of pole pairs and a high ratio diameter vs thickness. In some embodiments, the actuator is characterized by a low reduction ratio, which allows reducing the effect of inertial losses on the actuator, thus obtaining a high efficient system. In some embodiments, the actuator is characterized by an efficient reduction mechanism. In some embodiments, the weight and size reduction and relocation are achieved due to the use of a coaxial input-out layout.

An aspect of some embodiments of the invention relates to a backdrivable coaxial actuator, optionally for an exoskeleton, which is a quasi-direct drive actuator comprising a two-stage transmission, configured to provide a reduction ratio above 10. In some embodiments, the actuator comprises a high torque-motor coupled with a two-stage timing belt transmission, resulting in an energy-efficient actuator with high backdrivability, that offers high torques and speeds while keeping the system light and compact. In some embodiments, the backdrivability of the actuator facilitates the implementation of the most advanced control strategies without using expensive sensors. In some embodiments, the actuator is highly compact in relation to the maximum output torque, speed and backdrivability that it provides. In some embodiments, the coaxial actuator is provided by having the electric motor inside the output pulley/gear, which enables a denser/compacted package. In some embodiments, additionally, this enables the use of a two-stage timing belt transmission in a 4-actuated joint exoskeleton albeit space constraints.

An aspect of some embodiments of the invention relates to an actuator comprising a motor configured to provide a high torque output, comprises components that allow to provide medium to high reduction ratios that also allow to have a compact actuator. In some embodiments, the ratios are more than 10 and less than 50, for example between 12 and 36.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

Exemplary layout of the exemplary actuator

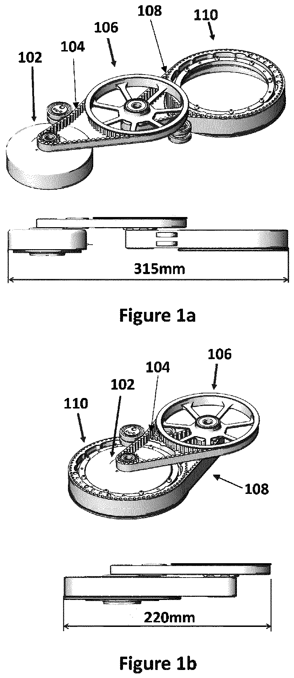

Referring now to Figures 1a and 1b, showing a comparison between a layout configuration of a linear-layout actuator (Figure 1a) and an exemplary compacted-layout actuator (Figure 1b), and according to some embodiments of the invention. In some embodiments, the actuator uses a two-stage transmission system. Usually, two-stage transmission actuators are organized in a serial-linear layout, as shown for example in Figure 1a. In a serial-linear layout, the input pulley **102** is connected to a mid pulley **106** by means of a first belt **104,** and the mid pulley **106** is connected to an output pulley **110** by means of a second belt **108**. Additionally, the input pulley **102,** the mid pulley **106** and the output pulley **110** are spatially arranged one after the other, as shown for example in Figure 1a. In some embodiments, the actuator comprises a compacted coaxial layout, as shown for example in Figure 1b. In some embodiments, similar to the serial-linear actuator shown in Figure 1a, the actuator of comprises an input pulley **102** that is connected to a mid pulley **106** by means of a first belt **104,** and the mid pulley **106** is connected to an output pulley **110** by means of a second belt **108.** In some embodiments, contrary to the actuator as shown in Figure 1a, the parts of the actuator are not spatially arranged one after the other. In some embodiments, the input pulley **102** driven by the electric motor is positioned inside the area of the output pulley **110,** thereby generating a coaxial layout. In some embodiments, a coaxial layout enables reducing the length of the actuator from about 20% to about 30%, optionally from about 15% to about 40%, optionally from about 10% to about 50%, for example 30%, 35%, 45%, when compared with a serial-linear layout. For example, the serial-linear actuator shown in Figure 1a comprises an estimated length of about 3 15mm, while the compacted actuator as shown in Figure 1b comprises an estimated length of about 220mm. In some embodiments, a potential advantage of providing a compacted footprint for the actuator is that, in an exoskeleton, it potentially enables assembling both actuators between the knee and the hip joints (in the thigh body segment) even for the shortest configuration (see below).

Exemplary two-stage reduction actuator

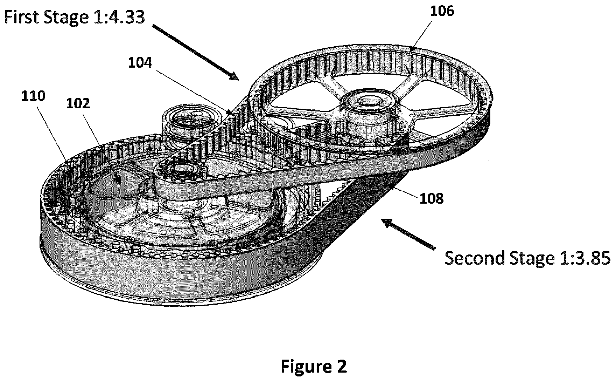

Referring now to Figure 2, showing a schematic representation of an exemplary two-stage reduction actuator, according to some embodiments of the invention. In some embodiments, the actuator uses a 2-stage timing belt transmission system designed in order to get the desired reduction ratio. In some embodiments, the reduction ratio of the actuator is tuned, for example, by changing the number of teeth of the pulleys. In some embodiments, the actuator is configured to allow reduction ratios from about 10 to about 20. For example, as shown in Figure 2 (same parts have the same numbers as shown in Figure 1b), a first stage reduction is achieved between the input pulley **102** and the mid pulley **106,** for example a reduction of 1:4.20 ratio; and a second stage of reduction is achieved between the mid pulley **106** and the output pulley **110,** for example a reduction of 1:4.28 ratio. This means that the total reduction is of 1:4.33 * 1:3.85 = 1: 17.96 ratio. It should be understood that these are exemplary numbers and that other ratios can be used to achieve either higher or lower ratios, according to the needs of the actuator application. In some embodiments, the ratios of the actuator are from about 1:10 to about 1:20, optionally from about 1:8 to about 1:30, optionally from about 1:5 to about 1:40, for example, 1:14, 1:16. 1:18, 1:20.

Exemplary motor

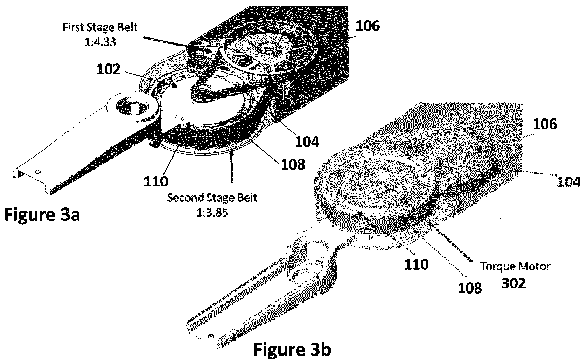

Referring now to Figure 3a and 3b, showing schematic representations from both sides of an exemplary actuator in an exoskeleton use, according to some embodiments of the invention. In some embodiments, the input pulley is actuated by a motor **302**. In some embodiments, the motor **302** is a high torque-motor. In some embodiments, the high torque-motor is a large diameter flat brushless motor with a high number of poles and a very high Kt (torque-current constant). Figure 3b shows the torque-motor **302.** In some embodiments, the motor comprises one or more of the following characteristics: a high peak torque (Nm), a small weight (gr), a small height (mm) and/or a large diameter (mm). For example, the motor comprises a peak torque of about 6 Nm, a weight of about 366 gr, a height of about 18.6 mm and/or a diameter of about 86.8 mm. In some embodiments, the motor comprises a ring with permanent magnets and an iron core with the stator coils. In some embodiments, the motor does not comprise a frame. In some embodiments, a potential advantage of using a frameless motor is that it potentially allows design freedom and additionally saves weight and space in the overall device.

In some embodiments, an exemplary motor used in the system is a T-motor Frameless U10 Kv25 motor, optionally with a RMB20 Rotary Magnetic Encoder Module. In some embodiments, exemplary technical characteristics of the motor include one or more of: a maximum current of about 9 A, optionally having a maximum current from about 8 A to about 15 A, optionally having a maximum current from about 5 A to about 30 A, optionally having a maximum current from about 3 A to about 50 A; a nominal torque of about 1.6 Nm, optionally having a nominal torque from about 1.4 Nm to about 2 Nm, optionally having a nominal torque from about 1 Nm to about 3 Nm, optionally having a nominal torque from about 0.5 Nm to about 6 Nm; a maximum torque of about 4.5 Nm, optionally having a maximum torque from about 4 Nm to about 6 Nm, optionally having a maximum torque from about 3 Nm to about 8 Nm, optionally having a maximum torque from about 2 Nm to about 12 Nm; a maximum speed of about 1200 rpm, optionally having a maximum speed from about 1000 rpm to about 1500 rpm, optionally having a maximum speed from about 800 rpm to about 2000 rpm, optionally having a maximum speed from about 300 rpm to about 3000 rpm.

The table below discloses exemplary technical parameters of four distinct motors, which will potentially assist a person having skills in the art in understanding the invention:

|  | U8 | | U10 | |
| --- | --- | --- | --- | --- |
|  | KV50 | KV100 | KV25 | KV50 |
| R_phase [mR] | 600 | 170 | 610 | 185 |
| Kt [Nm/A] | 0.19 | 0.095 | 0.32 | 0.19 |
| Ke [V/rpm] | 0.0199 | 0.0099 | 0.034 | 0.0199 |
| T_nom [Nm] | 1.2 | 1.2 | 1.6 | 1.9 |
| T_peak [Nm] | 3 | 3 | 4.5 | 5.5 |
| I_nom [A] | 6.25 | 12.5 | 5 | 10 |

(continued)

|  | U8 | | U10 | |
| --- | --- | --- | --- | --- |
|  | KV50 | KV100 | KV25 | KV50 |
| I_peak [A] | 17.5 | 35 | 15 | 30 |

In some embodiments, the motor receives energy and commands from a circuitry, which controls the actions of the motor, and therefore of the actuator. In some embodiments, the motor receives modulated energy which dictates the actions of the motor, and therefore of the actuator.

It should be understood that these characteristics and/or parameters and/or values are provided to allow a person having skills in the art to understand the invention. Other characteristics and/or parameters and/or values could be used in different settings and/or different configurations of motors. All of those are also included in the scope of the invention.

Exemplary belts

In some embodiments, the belts **104/108** are High Torque Drive (HTD) timing belts. In some embodiments, the belts **104/108** are High Power (HP) belts. In some embodiments, HP belts are used due to their low permanent and elastic stretch of the cord, friction and abrasion resistant fabric with high shear strength, and good resistance and smooth operation, low and medium shock load.

Exemplary integration of the exemplary actuator into an exoskeleton

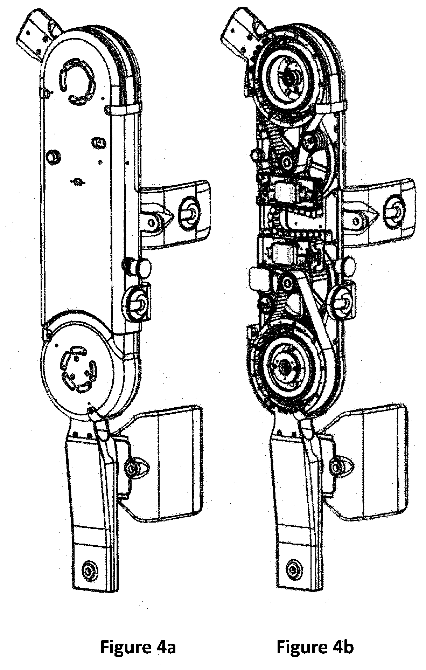

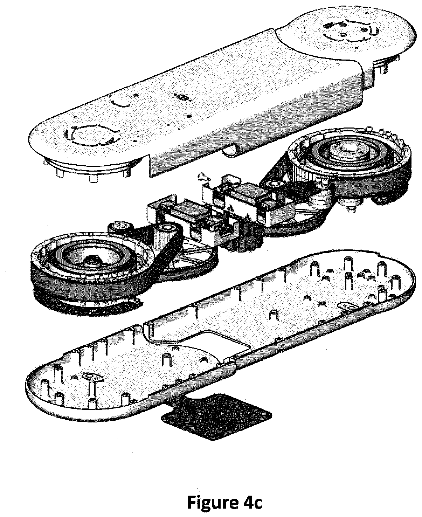

Referring now to Figures 4a, 4b and 4c, showing schematic representations of the actuators incorporated within an exoskeleton, according to some embodiments of the invention. In some embodiments, as mentioned above, one or more actuators are used in an exoskeleton. In some embodiments, due to the compact footprint provided by the coaxial actuator, it is possible to assemble two actuators between the knee and the hip even for the shortest configuration, as shown for example in Figure 4a, showing one leg part of an exoskeleton, as shown for example in Figure 4b, showing the one leg part of an exoskeleton showing the internal mechanism and the two actuators, and as shown in Figure 4c, showing an exploded view of the case of the exoskeleton and the internal mechanism of the exoskeleton. In some embodiments, parts of the exoskeleton are made of metals, for example, aluminum, titanium, etc. In some embodiments, parts of the exoskeleton are made of plastic and/or polymers, for example reinforced plastics.

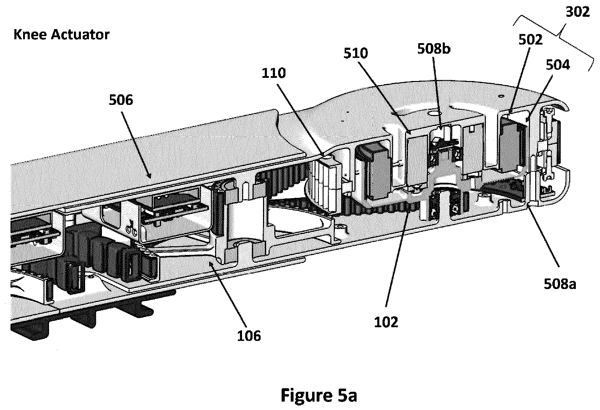

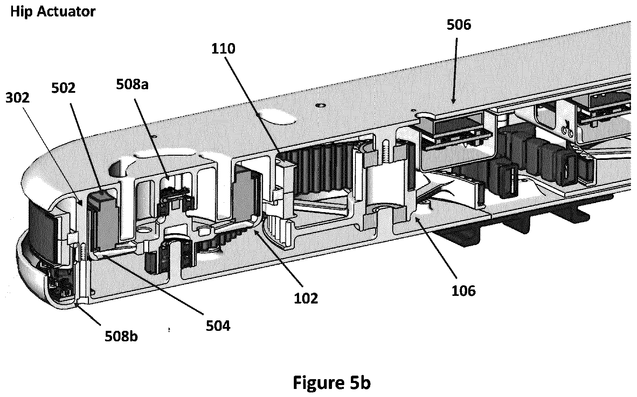

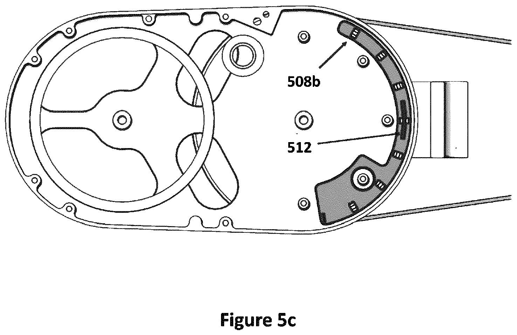

Referring now to Figure 5a, 5b and 5c, showing schematic representations of exemplary exoskeleton comprising the coaxial actuators, according to some embodiments of the invention. For the following explanations, the term "knee actuator" will be used to describe the actuator located close to the knee joint, while the term "hip actuator" will be used to describe the actuator close to the hip joint. In some embodiments, the knee actuator and the hip actuator are identical and/or comprise the same parts. In some embodiments, the knee actuator and the hip actuator are different and/or do not comprise the same parts.

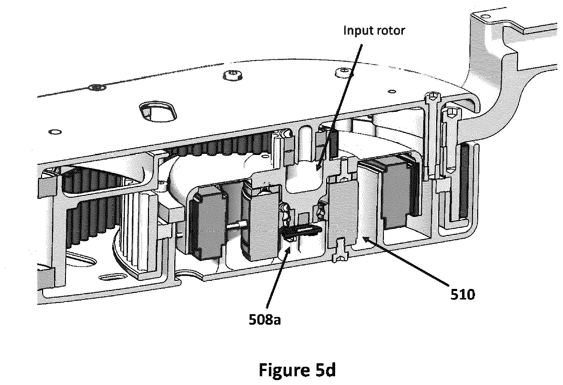

Referring now to Figure 5a, showing a schematic section view representation of a knee actuator of an exemplary exoskeleton, according to some embodiments of the invention. Figure 5a shows the frameless torque-motor **302** comprising a motor stator **502** and a motor rotor **504.** It is also shown the input pulley **102,** the mid pulley **106** and the output pulley **110.** In some embodiments, the exoskeleton comprises a servo drive **506,** responsible for transforming the direct current (DC) of the power supply into the right coil excitation to move the motor at the desired torque or speed. In some embodiments, this servo drive can work in two modes: position and torque control. In some embodiments, the exoskeleton comprises one or more encoders **508a-b,** (two are shown in Figure 5a see also Figure 5c), which are a type of rotary sensor, which comprise a non-contact and frictionless design that minimizes mechanical wear, weight and volume. Not to mention the high angular resolution that guarantees excellent performance. For example, exemplary encoders can be RMB20 encoders from RLS®. In Figure 5a, it is schematically shown exemplary locations where the encoders **508a-b** can be placed in the actuator, for example, one at the input rotor **508a** and one at the output rotor **508b.** In some embodiments, this dual-encoder design potentially provides precise real-time information of the input and output rotor position enabling a deep monitoring of the reduction system. In some embodiments, the knee actuator of the exoskeleton comprises a brake **510** (see also Figure 5d).

In some embodiments, as mentioned above, the actuator integrates an electromagnetic brake **510** (as shown for example in Figure 5d) and an output encoder **508b** (as shown for example in Figure 5c). In some embodiments, the electromagnetic brake **510** is used for safety purposes, being activated in the event of power loss, thus locking the joint to support the user in an upright position during the power loss. In some embodiments, optionally, the electromagnetic brake **510** is used only in the knee joints of the exoskeleton, thus locking the knee joints in the event of power loss, and therefore preventing the user from falling to the ground. In some embodiments, the hip joints do not comprise an electromagnetic brake **510,** and therefore the hip joints are free (not locked) in the event of power loss (similar to typical passive leg braces). In some embodiments, in addition, the brake **510** boosts the efficiency of the exoskeleton since the actuator is configured to use the brake to lock the joint while the user is standing upright and not spend energy with the motors for that purpose while standing up (one of the situations where the users spend most of the time). Referring now to Figure 5d, showing a schematic representation of an exemplary brake used in an actuator of an exoskeleton system, according to some embodiments of the invention. In some embodiments, the safety magnetic brake **510** blocks the joint in case of a power failure. In some embodiments, a potential advantage of having a magnetic brake is that it can potentially prevent any injury to the wearer in case of power failure and/or discontinuation. In some embodiments, the brake **510** is placed coaxially with respect to the motor and is coupled to the input stage of the actuator in order to take advantage of the reduction mechanism to amplify the braking force. In some embodiments, the brake could be either spring-actuated or magnetically actuated.

In some embodiments, the actuator comprises a dedicated mechanism, which allows knowing the position of the output at all times while avoiding the need of two complex encoders. In some embodiments, the dedicated mechanism is a newly developed optical encoder for the output, as shown for example in Figure 5c. In some embodiments, the information given by the encoder **508b** together with the information given by a single-turn absolute encoder **508a** in the electric motor provides an exact position of the output without the need of a homing procedure. In Figure 5c, the output encoder **508b** and the output encoder gauge **512** are shown.

Referring now to Figure 5b, showing a schematic section view representation of a hip actuator of an exemplary exoskeleton, according to some embodiments of the invention. Figure 5b shows the high torque-motor **302** comprising a motor stator **502** and a motor rotor **504.** It is also shown the input pulley **102,** the mid pulley **106** and the output pulley **110.**

Exemplary belt tensioning mechanism

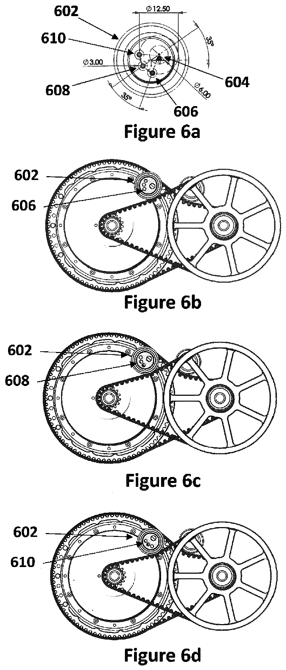

Referring now to Figures 6a-6d, showing schematic representations of an exemplary belt tensioning mechanism, according to some embodiments of the invention. In some embodiments, the actuator comprises a mechanism that allows the user to tension the belt. In some embodiments, the mechanism is an eccentric belt tensioner that allows tuning the belt initial tension with minimum space. In some embodiments, the tensioner consists of a ball bearing element **602** that rotates eccentrically around a bolt **604** and can be fixed in three different positions **606/608/610** by inserting a pin inside the desired hole, as schematically shown in Figure 6a. The number provided in Figure 6a are exemplary numbers. Other dimensions of the ball bearing element are also possible. Figures 6b, 6c and 6d schematically show how the belt is tensioned after each rotation of the ball bearing element, for example, an exemplary nominal length of a timing belt is about 425mm, in Figure 6b, the ball bearing element **602** is fixed in a first position **606** - low tension, bringing the belt to a length of about 425.09mm; in Figure 6c, the ball bearing element **602** is fixed in a second position **608** - medium tension, bringing the belt to a length of about 425.43mm; and in Figure 6d, the ball bearing element **602** is fixed in a third position **610** - high tension, bringing the belt to a length of about 426.01mm.

Exemplary configurable thigh segment of the exoskeleton

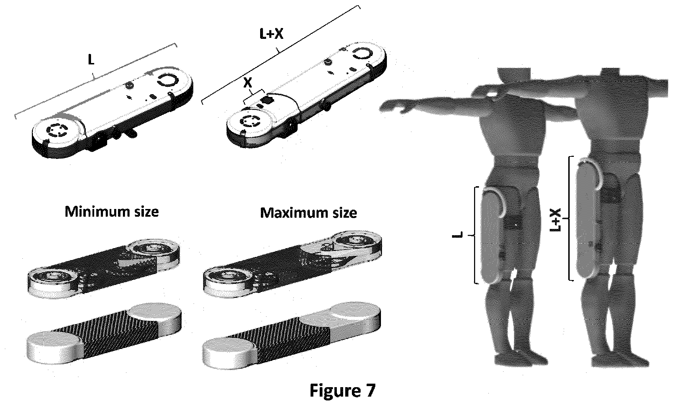

Referring now to Figure 7, showing schematic representations of an exemplary configurable thigh segment of an exoskeleton, according to some embodiments of the invention. In some embodiments, the length of the thigh segment of the exoskeleton can be modified according to the needs of the user. For example, in Figure 7 it is shown a thigh segment having a minimum size **L,** which is suitable for shorter people. Also shown is a thigh segment that has been extended a length **X,** bringing the total length of the thigh segment to a length of **L+X,** which is suitable for taller people.

Exemplary circuitry

In some embodiments, the actuator comprises circuitry configured to control the activity of the actuator. In some embodiments, external circuitry, for example incorporated in an exoskeleton, is connected to the actuator and is configured to control the actions of the actuator.

Exemplary principal of the relationship between backdrivability and efficiency of the actuator

Without being bound to theory, the efficiency of a motor is usually considered as the relation between the output mechanical power ($T*\omega$) and the input electrical power ($V*I$). The efficiency has a different value for each working condition (specific velocity and torque) and can range from 0 (when the output speed is 0) to a maximum value (which is usually specified as "the efficiency of the actuator"). On the other hand, without being bound to theory, the backdrivability is considered as the mechanical efficiency of an actuator between output axis and electric motor. Additionally, backdrivability is known as the easiness of moving an actuator from its output rotor. In other words, the torque required to move the output rotor. It should be noted the difference between both concepts. Some motors can be efficient but not backdrivable, for example, a worm gear 1:5 is 95% efficient and 0% backdrivable.

As mentioned above, the actuator of the invention comprises a low backdriving torque (meaning comprising high backdrivability). In some embodiments, a potential advantage of having an actuator comprising high backdrivability is that it potentially allows implementing control technics, which would be extremely difficult to implement with conventional motors, at least not without adding extra sensors.

Again, without being bound to theory, the following calculations show a simplified approach that estimates the backdriving toque:

$$Backdriving\ torque = \frac{Cogging\ torque * Reduction\ ratio + Bearing\ Losses}{Timming\ belt\ efficiency}$$

Where:

Cogging torque: turning resistance offered by the electric actuator times the reduction ratio. Usually, it is the main contributor to backdrivability. In some embodiments, the actuator of the invention comprises low-mid reduction ratios.

Bearings friction losses (simplified approach): friction coefficient times radial forces suffered by the bearings.

Inertial contribution: moment of inertia times angular acceleration. In some embodiments, this is ignored due to the lack of fast accelerations performed by the system.

Mechanical transmission efficiency: characteristic of the timing belts. Timing belts usually range from 95% to 98% of maximum mechanical efficiency. In some embodiments, as the actuator comprises two timing belts in series the total efficiency ranges from about 90% to 96% of maximum mechanical efficiency.

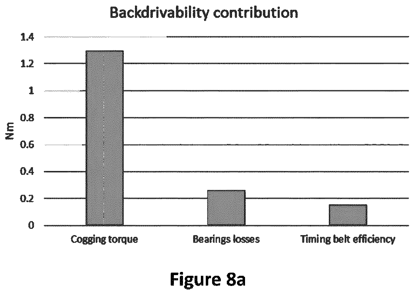

In some embodiments, an exemplary reduction ratio of the system is of 1:17.96 (just as an example for the calculations), which provides a theoretical backdriving torque of about 1.7 Nm. The contribution of each element without including the inertial contribution to backdriability is as shown, for example, in the graph as shown in Figure 8a. The theoretical calculations match the experimental tests performed, which show a backdriving torque from about 1.7 Nm to about 1.98 Nm, using the exemplary reduction ratio of 1:17.96. In some embodiments, the backdriving torque is from about 1.2 Nm to about 2.0 Nm, optionally from about 0.5 Nm to about 2.5 Nm. In some embodiments, the nominal torque is from about 20 Nm to about 40 Nm, optionally from about 10 Nm to about 100 Nm.

Just as an example to emphasize the potential advantages of the actuator of the invention, the following comparative table shows the differences between the invention and known motors:

| Motor | Backdriving torque | Nominal torque (continuous operation) |
|---|---|---|
| The invention | 1.7 Nm | 36 Nm |
| T-Motor AK10-9 | 0.7 Nm | 18 Nm |
| Harmonic Drive FLA 17-100 (1:100 ratio) | 7 Nm | 11.4 Nm |

It should be noted the mid-low backdriving torque with the high nominal torque provided by the actuator of the invention when compared to the known motors.

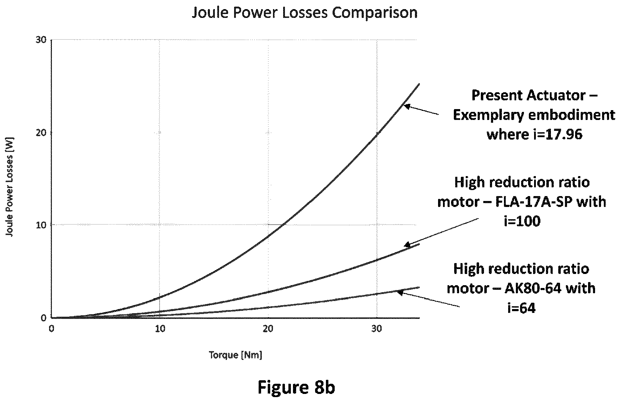

Referring now to Figure 8b, showing a graph representing an exemplarly comparison in Joule Power losses between known systems and the present system, according to some embodiments of the invention. In some embodiments, in order to provide the system with higher backdrivability capabilities, the actuator comprises a lower reduction ratio in relation to parallel systems which are configured to provide similar output torques. In some embodiments, in order to compensate for the relative lower reduction ratio, the motor of the system is configured to compensate by delivering higher torques. In some embodiments, delivering higher torques means higher currents and/or higher phase resistance. In some embodiments, these two facts combined cause higher Joule Losses (for example, in the form of heat) than other known actuators having high reduction ratios. The graph shown in Figure 8b shows this trade-off, where it can be seen that an actuator according to some embodiemnts of the present invention consumes between 2.5 and 5 times more power in relation to other actuators at the same torque (36 Nm).

Exemplary additional information regarding the integration of an exemplary actuator in an exoskeleton

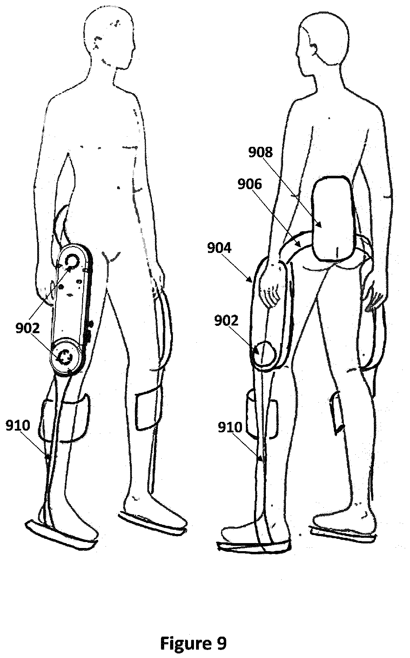

Referring now to Figure 9, showing a schematic representation of an exemplary integration of the exemplary actuator into an exoskeleton, according to some embodiments of the invention. In some embodiments, one or more actuators **902** are enclosed in a housing **904.** In some embodiments, an exemplary exoskeleton may comprise a belt or a hip holder **906** and a back element **908,** optionally comprising a power source and main electronics. In some embodiments, the part of the exoskeleton comprising the actuators is a thigh element, in which the upper actuator, located near the hip, is configured to assist with the movements of the thigh itself from the hip, and the lower actuator, located near the knee, is configured to assist with the movements of the lower leg, by moving the lower leg element **910,** which is reversibly attached to the lower leg and optionally also to the foot. In some embodiments, elements that are actuated by the actuator are called actuated applied part, and are those that are attached to the body of the user. In some embodiments, the actuated applied part can be attached to one or more of a hip, a knee, a foot, an ankle, a wrist and an elbow. In some embodiments, there are rigid elements, for example parts, optionally made of plastic, which are jointed to the actuator/device by means of adjustable mechanisms (fixed or rotating) or directly bolted to the actuator/device.

Exemplary beltless actuator

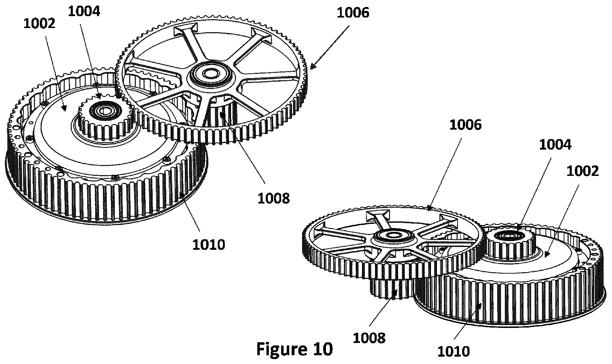

Referring now to Figure 10, showing a schematic representation of an exemplary beltless actuator, according to some embodiments of the invention. In some embodiments, the actuator is not driven by belts that connect between the pulleys, but directly driven by the gear teeth. In some embodiments, a motor **1002** provides speed and force to an input gear **1004.** In some embodiments, an upper part of the mid gear **1006** is meshed (in direct communication) with the first gear **1004.** In some embodiments, a bottom part **1008** of the second gear **1006** is meshed (in direct communication) with an output gear **1010.** In some embodiments, the beltless actuator is provided with lubricant material between the teeth of the gear to assist with the rotation of the gear and avoid damaging friction.

Exemplary use of Bowden cables in an exoskeleton comprising the actuator

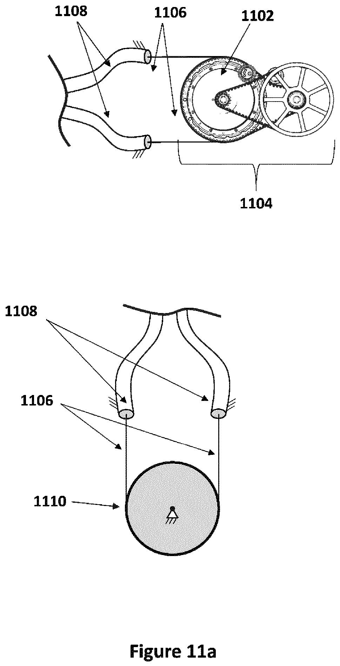

Referring now to Figure 11a, showing a schematic representation of an exemplary use of the exemplary actuator with a Bowden cable system, according to some embodiments of the invention. In some embodiments, the actuator allows the placement of the actuators in any location of the human body (for example: near the human center of mass, or other proximal regions) and transmits the movement, for example, through Bowden cables to the desired joint (for example: distal region of the body). For example, as can be seen in Figure 11a, the actuator comprises one or more motors **1102** (one is shown) connected to a system **1104,** as explained above. In order to facilitate the explanations, a simplification of the system is disclosed. In some embodiments, one or more cables **1106** exit from the reduction system, entering the hollow outer cable housing of Bowden cable system **1108.** In some embodiments, at the other end of the hollow outer cable housing of Bowden cable system there is the output pulley **1110** (shown schematically), configured to provide the motion to the outside of the actuator to the relevant body part. In some embodiments, a potential advantage of utilizing a Bowden cable system is that it allows the use of the cable-driven actuator in an exoskeleton with a non-rigid mechanical structure made of textile parts (fabric harness), also known as soft exoskeleton or exosuit. This type of exoskeleton overcomes the movement restrictions of rigid exoskeleton systems, minimizing limitations in movement and reducing the weight of the device (weight-bearing relies on the user's skeletal structure alone), which is especially useful for people with mild motor disabilities.

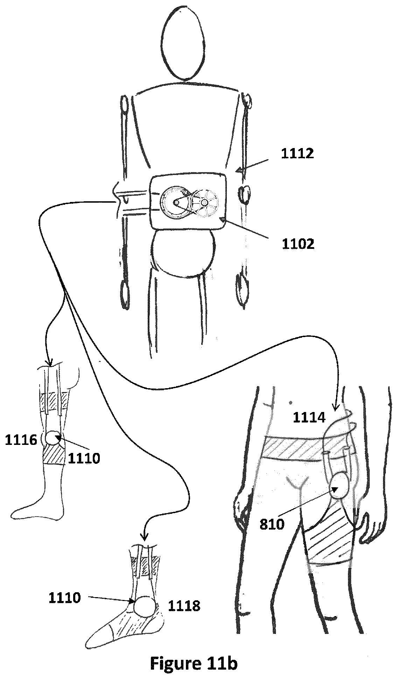

Referring now to Figure 11b, showing a schematic representation of an exemplary use of the exemplary cable-driven actuator in a soft exoskeleton, according to some embodiments of the invention. As explained before, the actuator comprising one or more motors **1102** is placed, for example, inside the back module **1112.** In some embodiments, from there, the actuation can be delivered by the output pulley **1110** to one or more extremities, for example, to the thigh **1114,** to the knee **1116** and/or to the ankle **1118.** In some embodiments, additionally, the one or more extremities are one or more of a shoulder, an elbow and a wrist.

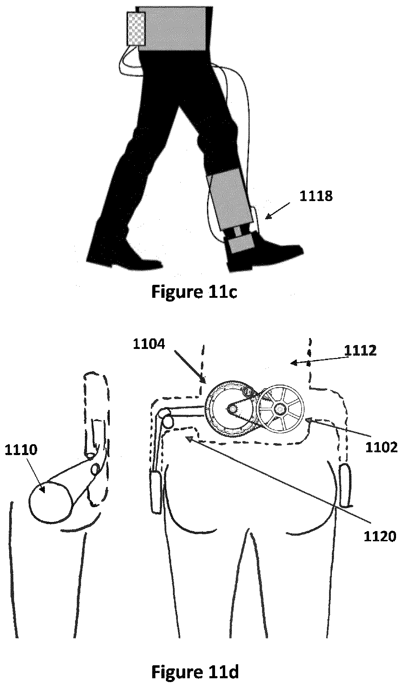

Referring now to Figure 11c, showing a schematic representation of an exemplary use of the exemplary cable-driven actuator in a soft exoskeleton, according to some embodiments of the invention. In some embodiments, the actuation mechanism as explained for Figures 11a and 11b, are used without using an output pulley **1110,** by attaching the Bowden cable ends to the foot segment **1118** (one near the toe of the shoe and another one near the heel). In some embodiments, the release of the cable allows the ankle to move freely, while the tension of the cables blocks the movement of the ankle.

Referring now to Figure 11d, showing a schematic representation of an exemplary use of the exemplary cable-driven actuator in a rigid exoskeleton, according to some embodiments of the invention. In some embodiments, the actuator mechanism and motor **1102** are located at the back module **1112.** In some embodiments, the cable is then redirected to the hip joint. In some embodiments, a potential advantage of redirecting the cable is that it potentially reduces the weight in the distal segment, which is potentially useful for people with little to no remaining motor function in their lower limbs.

Exemplary uses of the actuator

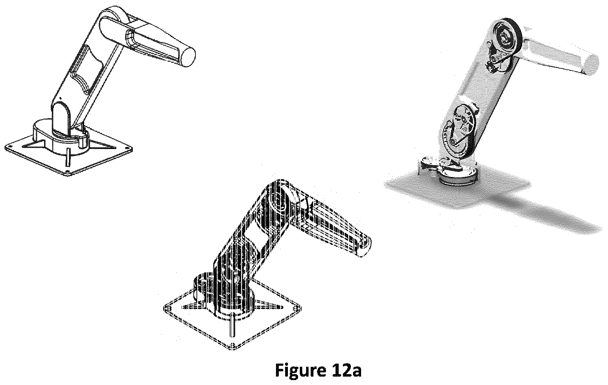

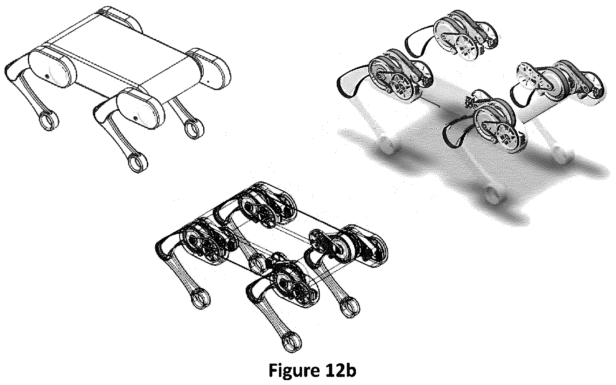

In some embodiments, as previously disclosed, the actuator can be used for the actuation of exoskeletons. It should be understood that the actuator can be used for other purposes, for example, for robotic machines, industrial robots, vehicles, toys, etc. For example, with reference to Figures 12a and 12b, Figure 12a shows a schematic representation of an industrial robot or collaborative robot comprising the actuator according to some embodiments of the invention, and Figure 12b shows a schematic representation of a four-legged robot comprising eight actuators according to some embodiments of the invention.

Exemplary recharging

In some embodiments, the exoskeleton comprises a battery configured to provide power to the whole system, for example, to the actuators, the electrical components, etc. In some embodiments, the battery is a rechargeable battery. In some embodiments, the backdrivable actuator is configured to utilize momentums from the movement of the patient wearing the exoskeleton in order to recharge the battery. For example, the motor is configured to provide speed and force to the pulleys in order to move an output element, which in this case, will move a body member of the patient wearing the exoskeleton. In some embodiments, the system is configured to detect when forces are inserted into the system, either by the momentum provided by the movement of the patient or by actively moving the output element, and utilize those forces to recharge the battery by converting those forces into energy.

In some embodiments, recharging of the battery can be done by providing the exoskeleton with spring mechanisms in the foot that utilize the stepping actions performed by the user during walking in order to actuate the recharging mechanisms. Similar to what was explained above, the system utilizes forces directed to the system to transform them into energy for recharging the battery.

Exemplary general information

In some embodiments, the actuator is an electrically powered actuator. In some embodiments, the actuator is pneumatically and/or hydraulically powered. In some embodiments, a potential advantage of using an electrically powered actuator is that electric batteries are quite compact compared to other power sources such as pneumatic compressors.

In some embodiments, the size of the actuator is smaller than known actuators, for example, between about 10% to about 50% smaller in comparison to known actuators. Optionally between about 5% to about 60% smaller in comparison to known actuators. Optionally between about 1% to about 70% smaller in comparison to known actuators. In some embodiments, the actuator comprises an outer dimeter that is from about 50mm to about 200mm, optionally from about 40mm to about 250mm, optionally from about 30mm to about 275mm. In some embodiments, the actuator comprises an outer dimeter of less than 100mm. In some embodiments, a potential advantage of having a smaller actuator is that it provides a system that is less bulky to the user. In some embodiments, the actuator follows the shape of the human leg. In some embodiments, the actuator comprises a small form factor.

In some embodiments, an exemplary actuator provides one or more of the following parameters:

1. A nominal output torque of about 36 Nm, optionally from about 20 Nm to about 40 Nm, optionally from about 10 Nm to about 80 Nm.
2. A maximum output peak torque of about 60 Nm, optionally from about 40 Nm to about 70 Nm, optionally from about 10 Nm to about 100 Nm.
3. A maximum output velocity of about 80 rpm, optionally from about 70 rpm to about 90rpm, optionally from about 50rpm to about 100rpm.
4. A mid-low backdriving torque of about 1.7 Nm, optionally from about 1 Nm to about 2 Nm, optionally from about 0.5 Nm to about 2.5 Nm.

In some embodiments, the motor is "sensible" enough to sense forces coming from the output elements in the exoskeleton from the current drawn in the motor. For example, a user begins a movement to extend a leg. The movement of the leg will actuate the mechanisms of the actuator from the opposite direction, meaning, is not the motor that drives the movement of the actuator but rather the movement performed by the user that causes the movement of the actuator. In some embodiments, the motor can "sense" this movement and begin assisting the user by actuating the actuator in the same direction. In some embodiments, since the actuator comprises high backdrivability, this feedback mechanism using the current drawn by the motor is extremely useful in partially assisting the user to use the exoskeleton.

In some embodiments, the actuator is configured to deliver a high torque in relation to the angular speed. In some embodiments, the actuator delivers a torque (Nm) / angular speed (RPMs) of from about 0.4Nm/RPM to about 1.6Nm/RPM of maximum torque / maximum. For example, the motor provides 60Nm and 83RPM, which is equivalent to 0.7 Nm/ RPM. In some embodiments, a requirement of the device comprising the actuator is to interact with the environment (for example, an exoskeleton with the patient and/or environment, an industrial robot with operators, the four-legged robot with the ground and obstacles and/or other machines), therefore the device is equipped with the backdrivable actuator enabled by a reversible motor. In some embodiments, the actuator comprises a reversibility torque vs. maximum torque ratio of less than 5%, ideally less than 2.5%, for example, the actuator comprises a reversibility torque of 1.55 Nm and provides a maximum of 60 Nm, which is equivalent to 2.5% reversibility torque / maximum torque ratio.

Various embodiments and aspects of the present invention as delineated hereinabove and as claimed in the claims section below find experimental support in the following exemplary embodiments.

## EXEMPLARY EMBODIMENTS

Reference is now made to the following exemplary embodiments, which together with the above descriptions illustrate some embodiments of the invention in a non-limiting fashion.

In the following section, an exemplary belt actuator is presented together with design specifications and tests performed, including the following:

1. General notes related to the system;
2. Frameless tests: tests carried out with the "electric part" of the actuator;
3. Whole system endurance test: actuator fatigue performance tests, highlighting the number of cycles at maximum torque, the motor synchronism and maximum temperatures reached.

### 1. General notes related to the system

In some embodiments, an exemplary main characteristic of the belt actuator is the combination of torque motor and a low reduction ratio transmission. In some embodiments, the torque motor used is a large diameter flat brushless motor with a high number of poles and a very high Kt (torque-current constant). In some embodiments, in relation to the reduction system, commercial High Torque Drive (HTD) timing belts are used. More specifically, High Power (HP) belts are used due to their low permanent and elastic stretch of the cord, friction and abrasion resistant fabric with high shear strength, and good resistance and smooth operation, low and medium shock load. In some embodiments, in order to get the desired reduction ratio, a two-stage timing belt system has been designed, as shown for example in Figures 1b and 2.

Figures 5a and 5b show a section view of the knee and hip actuators. In some embodiments, both systems use exactly the same components except for the emergency brake that is optionally only placed in the knee actuator.

Exemplary safety features: In some embodiments, as mentioned above, the system integrates a safety magnetic brake and an output encoder. In some embodiments, the normally-closed brake (it brakes when power is released) adds a safety layer to the device that in case of power loss will still hold the weight of the user. In addition, it boosts the efficiency of the exoskeleton as the motors will not spend any energy while standing up still (one of the situations where the users spend most of the time). In some embodiments, an exemplary brake is a 03.P1.310-400 brake from the manufacturer KEB. This brake of 11W and 24Vdc can deliver 2 Nm of constant braking torque in the input, which translates to 36 Nm of braking torque in the knee.

In some embodiments, on the other hand, to know the position of the output at all times, an optical encoder for the output has been included, as shown for example in Figure 5d. In some embodiments, the information given by this encoder together with the information given by a single-turn absolute encoder in the electrical motor, gives the exact position of the output without the need for a homing procedure.

### 2. Frameless tests:

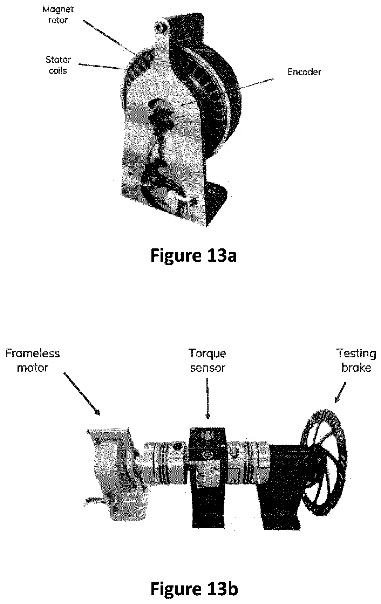

The frameless motor, as shown for example in Figure 13a, consists of a rotor (magnet ring) and a stator (soft iron core with copper coils) that are glued to a machined structure that transmits the torque generated by the motor. A test bench, as shown for example in Figure 13b, was built in order to obtain the motor constants and its thermal behavior: it is composed of a custom-made machined structure for the frameless motor, a torque sensor and a disk brake. Then, this test bench is connected to a driver controlled by a 32-bit Teensy® USB-based microcontroller that reads and stores the data from the different sensors.

The drive configuration used in the tests includes the following parameters:

Ip = 15 [A]; t_peak = 2000 [ms]; Imax = 15 [A]; V_max = 20 [rev/s]; In = 5 [A]; Pole-pairs = 21; R_ntc = 10000 [$\Omega$]; $\beta$ = 3984 [K]; Tmax =100 [°C]; Encoder =4096 [CPR];
Ph_acc = 120 [m°]; fpwm =50 [kHz].
Current loop: Kp = 2.02; Ki = 1739.2

Velocity loop (for torque v. velocity tests): Kp = 2; Ki = 4

## Test results

### Encoder linearity test

The encoder linearity test gives a measure of the coaxiality between the motor and the encoder. This is especially relevant because, depending on the misalignment, the effective output torque can be equal to or lower than expected. This test was performed in two conditions: half the nominal current and the nominal current. In both cases, two complete mechanical revolutions in opposite directions (in order to account for friction) were made. The test parameters were: Data sampling rate: 100Hz; Drive: Everest XCR; Steps: 12600 (increments of 0.03 mechanical degrees).

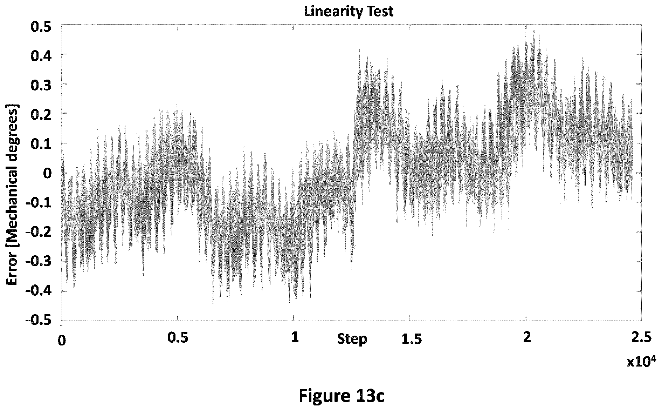

On the graph in Figure 13c, the error in mechanical degrees is reported and, knowing that the number of poles of the motor is 21, it is converted into electrical degrees. It can be seen that the encoder performs a maximum of 7 electrical degrees of error, corresponding to 1.5% of torque ripple. This small torque loss is considered as acceptable as it does not affect the functionality of the device.

### Torque constant

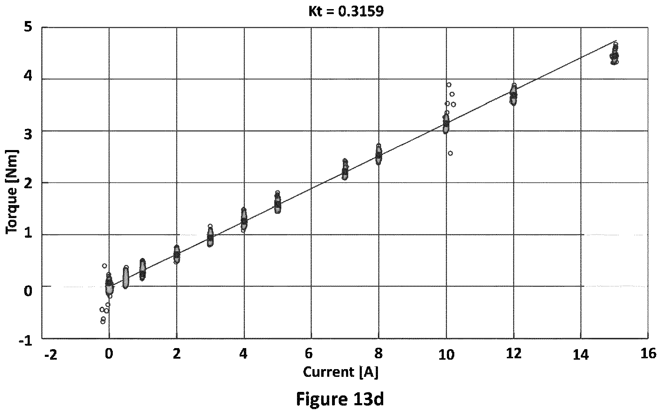

In some embodiments, the torque constant determines the relationship between the quadrature current applied to the motor coils and the torque delivered by the actuator. This is sometimes an important parameter because it gives information on how much torque is being applied to the patient's leg. In some embodiments, to measure the torque constant several tests were performed recording the torque output with the motor stalled at different currents. In other words, the motor was completely blocked by the disk brake, while the torque sensor was recording the torque applied by the actuator. The result can be seen in the graph shown in Figure 13d, where torque is plotted against current, resulting in: Kt=0.3159.

### Temperature model

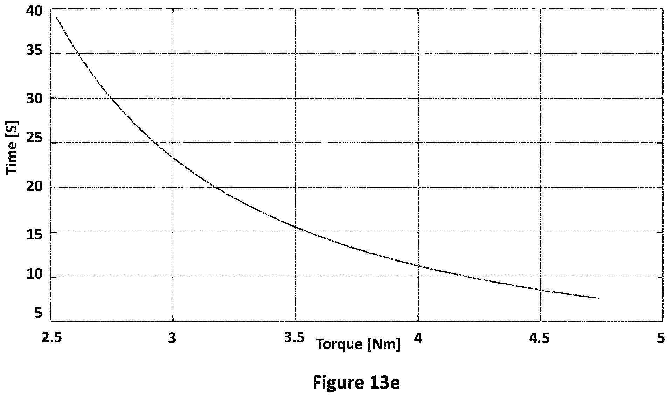

In some embodiments, the purpose of this test was to determine the relationship between the torque delivered by the motor and the time necessary to reach the maximum temperature of the stator coil. To do so, the motor was excited at different temperatures while the time to reach 100°C was measured, always starting at 24°C. The test parameters were: Data sampling rate: 100 Hz; Drive: Everest XCR; Thermistor Model: NTCLE305E4103SB; ambient temperature: 24°C; Number of tested currents: 4 (3 A, 5 A, 10 A and 15 A). The results are reported in the graph shown in Figure 13e, where can be seen that the relationship follows an exponential curve.

## Whole system endurance

Experimental protocol

Once the "electric part" of the actuator is tested, it is possible to check how the whole system, made by electric motor, reduction system and casing, is capable to withstand the efforts for a long time. To do so, a test bench was built: it connects the actuator to a resistance motor that replicates the loads applied by the patient. As mentioned above, an exemplary motor used by the actuator, and which was used for the test, is an electric frameless motor, T-Motor U10 Kv50, together with a RMB20 Rotary Magnetic Encoder Module.

Reduction system: a 2-stage timing belt reduction system was used, having a reduction ratio i=16.68. The 1st stage comprised a Optibelt Omega HP 5MHP 425x9 belt, while the 2nd stage comprised a Optibelt Omega HP 5MHP 475x25 belt.

|  | Number of Teeth | Pitch diameter (mm) |
|---|---|---|
| Input small | 15 | 23.87 |
| Input big | 65 | 103.45 |
| Output small | 20 | 31.83 |
| Output big | 77 | 122.55 |

The motor's main characteristics:

| Max Current | 25.0 A |
|---|---|
| Nominal Torque | 33.37 Nm |
| Maximum Torque | 75.08 Nm |
| Maximum Speed | 71.93 rpm |

Test parameters:

Data acquisition rate: 33Hz; Set-point updating rate: 1000Hz; Drive 1: Everest XCR; Drive 2: Everest XCR; Thermistor: NTCLE305E4103SB.

Monitored parameters:

Quadrature current; Velocity; Position; Temperature.

One run is:

- 10 walking profiles with a peak position of 70 degrees and peak torque of 57NM;
- 1 sit-to-stand profile with a peak position of 70 degrees and a peak torque of 48.6Nm;
- 1 stand-to-sit profile with a peak position of 70 degrees and a peak torque of 48.6Nm;
- A total of 12 cycles
- Each cycle lasts 1 second.

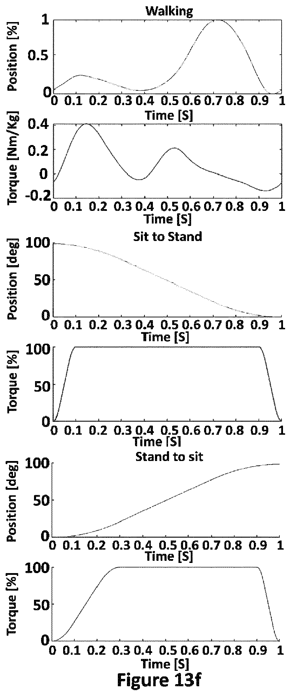

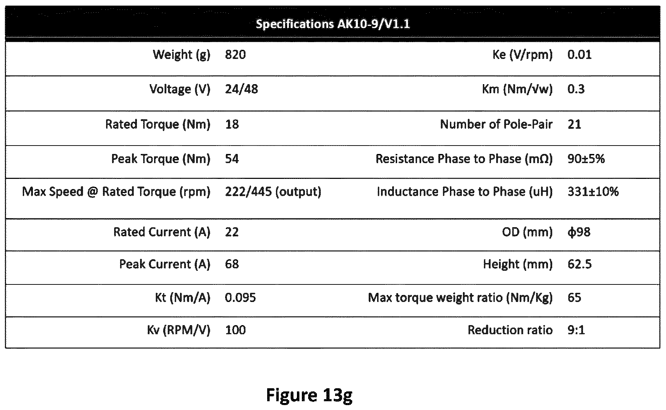

Exemplary graphs showing the results of the tests can be seen in Figure 13f. Exemplary resistance motor characteristics are as shown in Figure 13g.

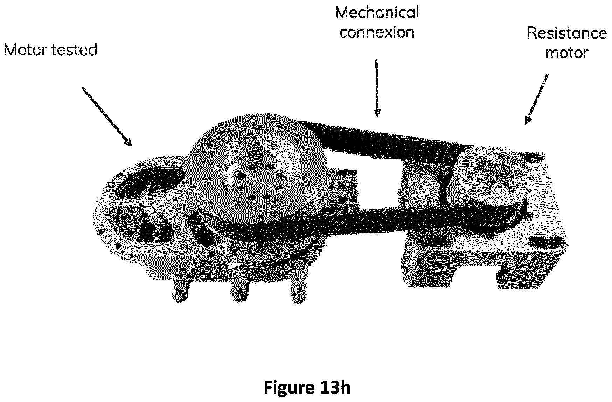

Figure 13h shows the main components of the test bench (the actuator and the resistance motor) together with the mechanical coupling composed of 1:2 timing belt. The timing belt (8M 720x35) has been oversized to make sure it interferes as little as possible with the results.

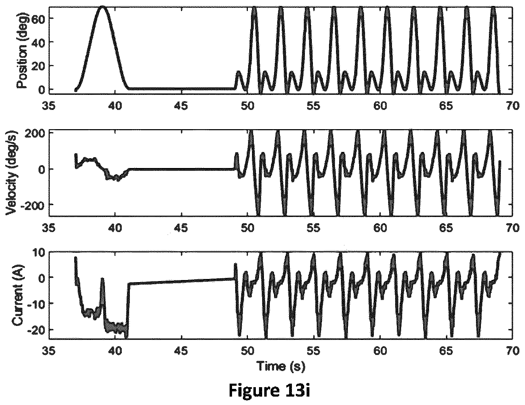

Figure 13i shows charts showing the position, velocity and current profiles of 12 cycles (1 sitting down, 1 standing up and 10 steps).

**Test Results**

Number of cycles

In many cases, it is important to know the expected life of the actuator, e.g., by knowing the maximum number of cycles that the actuator can withstand and the expected cycles per year, it is possible to determine the expected lifespan of the motor. Determining the average loads that the motor will suffer is almost impossible because each user will load the device differently based on their injury, weight, ability, etc. For this reason, the motor was loaded at its absolute maximum working conditions. This will lead to a shorter theoretical life expectancy than real.

The test ran smoothly for 508,000 cycles at maximum torque. At that point, the motor experienced belt ratcheting (teeth jump). Belt ratcheting is the safest type of failure, as it does not imply a mechanical disconnection between the input and output. In other words, the motor is always holding the patient.

$$Average\ cycles\ per\ year$$

$$= Business\ days\ per\ year * sessions\ per\ day$$

$$* \frac{Average\ steps\ per\ session}{2} = 250 * 4 * \frac{200}{2}$$

$$= 100,000\ cycles\ per\ year$$

$$Actuator\ Life\ Expentancy = \frac{Number\ of\ cycles\ in\ the\ fatigue\ test}{Average\ cycles\ per\ year}$$

$$= \frac{508,000\ cycles}{100,000\ cycles} \cong 5\ years$$

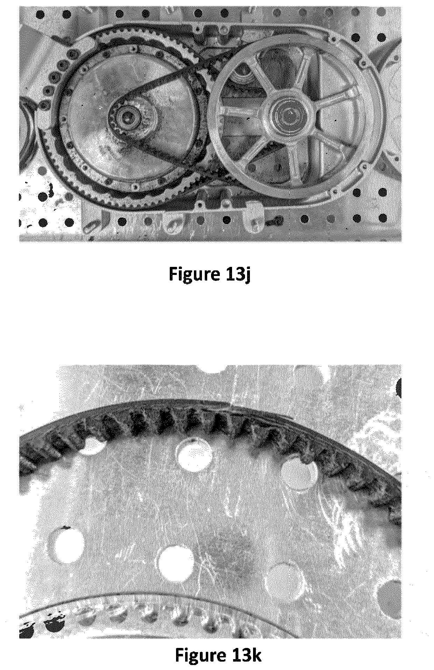

Figure 13j shows the actuator uncovered after performing all the fatigue tests. The first thing that can be seen is that there is some rubber debris all over the motor. This debris comes from the timing belts, and most of it was released in the last cycles of the test.

Figure 13k shows how the timing belt was affected by the teeth jump. Some of the teeth were damaged and were only partially attached to the belt cord. In addition, some of the belt cords were also damaged.

Motor synchronism

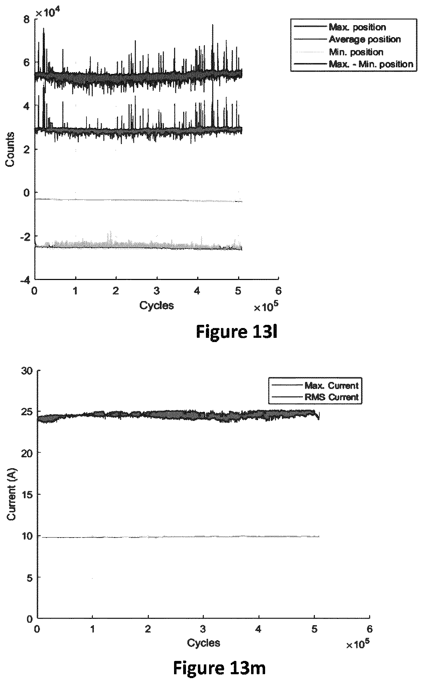

The motor synchronism is defined as the error between the input rotor angle and the human leg angle. This parameter shows how closely the human leg will follow the desired trajectory imposed on the motor. In some cases, the goal is to have the smallest possible error and, possibly more importantly, to have a constant error though all the actuator's expected lifespan. The graph in Figure 13l shows the plot of the evolution of the input-output error during the whole fatigue test. It can be seen that the error does not increase over time, so the motor keeps its synchronization over time.

Motor Current

The motor current gives information about the actual torque that the system is delivering. By checking the current data, the severity of the test can be checked. The graph in Figure 13m shows that the motor was doing the maximum possible effort during the fatigue test. It can be seen that the Root-Mean-Square current is equal to the nominal current and the peak current is always reached in each cycle.

Maximum Temperature

Regarding the temperature data, it is can be important to check if the fact of enclosing the frameless motor inside the actuator changes the thermal behavior of the system. To do so, the temperature of the stator coils was measured during the whole experiment.

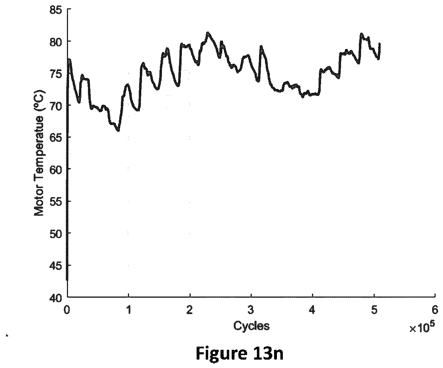

The chart in Figure 13n shows that the temperature never reaches 100°C which is the maximum operating temperature specified by the manufacturer (T-Motor). In the chart, it can be seen that the temperature has a periodic fluctuation. This temperature variation is caused by the room temperature variation during day and night.

Exemplary methods

In some embodiments, an exemplary method of providing an exoskeleton and/or transmitting power in an exoskeleton, the exoskeleton comprising an actuator comprising one or more of:

1. at least one motor for providing a first speed and a first force to at least one reduction assembly;
2. at least one two-stage reduction assembly comprising at least one input pulley and at least one output pulley; the at least one two-stage reduction assembly configured to perform a speed reduction in the first speed and a force increment in the force received from the at least one motor;
3. where the at least one motor, the at least one input pulley and the at least one output pulley are inside each other within the actuator, thereby allowing the actuator to comprise a width up to 10cm;
4. where the two-stage reduction assembly provides a reduction ratio of from about 1:10 to about 1:50;

5. where the actuator is characterized by having a mid-low backdriving torque from about 0.5 Nm to about 2.5 Nm and a nominal torque from about 10 Nm to about 100 Nm;

6. where the at least one motor and the at least one two-stage reduction assembly are configured to provide the actuator with capabilities for delivering a maximum torque/weight ratio from about 40 Nm/Kg to about 100 Nm/Kg.

7. where the at least one motor, the at least one input pulley and the at least one output pulley are coaxially located and in the same plane within the actuator.

8. where the at least one motor and the at least one two-stage reduction assembly are configured to provide the actuator with the capabilities without compromising backdrivability capabilities of the backdrivable motor.

9. where the at least one reduction assembly comprises: the at least one input pulley and at least one additional pulley; the at least one input pulley operably connected to the at least one motor; a first belt positioned between the at least one input pulley and the at least one additional pulley; the first belt configured to transmit speed and force to the at least one additional pulley; the at least one output pulley; a second belt positioned between the at least one additional pulley and the at least one output pulley; the second belt configured to transmit speed and force to the at least one output pulley.

10. where the at least one additional pulley is outside the at least one motor, the at least one input pulley and the at least one output pulley but on a same plane as the at least one motor, the at least one input pulley and the at least one output pulley.

11. where the at least one input pulley and the at least one additional pulley provide a reduction of from about 1:3 to about 1:6.

12. where the at least one additional pulley and the at least one output pulley provide a reduction of from about 1:2 to about 1:6.

13. where: the at least one reduction assembly does not comprise belts; the at least one input pulley is an input gear that is meshed with at least one additional gear; and the at least one additional gear is meshed with an output gear.

14. at least one energy source configured for providing energy to the actuator.

15. at least one encoder configured for providing real-time information about a position of the at least one input pulley of input and the at least one output pulley.

16. at least one brake configured for locking the actuator in case of emergency.

the method comprising: providing an actuator as disclosed above within an exoskeleton and actuate the axoskeleton accordingly.

As used herein with reference to quantity or value, the term "about" means "within ± 20 % of'.

The terms "comprises", "comprising", "includes", "including", "has", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

Throughout this application, embodiments of this invention may be presented with reference to a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as "from 1 to 6" should be considered to have specifically disclosed subranges such as "from 1 to 3", "from 1 to 4", "from 1 to 5", "from 2 to 4", "from 2 to 6", "from 3 to 6", etc.; as well as individual numbers within that range, for example, 1, 2, 3, 4, 5, and 6. This applies regardless of the breadth of the range.

Whenever a numerical range is indicated herein (for example "10-15", "10 to 15", or any pair of numbers linked by these another such range indication), it is meant to include any number (fractional or integral) within the indicated range limits, including the range limits, unless the context clearly dictates otherwise. The phrases "range/ranging/ranges between" a first indicate number and a second indicate number and "range/ranging/ranges from" a first indicate number "to", "up to", "until" or "through" (or another such range-indicating term) a second indicate number are used herein interchangeably and are meant to include the first and second indicated numbers and all the fractional and integral numbers therebetween.

Unless otherwise indicated, numbers used herein and any number ranges based thereon are approximations within the accuracy of reasonable measurement and rounding errors as understood by persons skilled in the art.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. An actuator, comprising:

   a. at least one motor (302) for providing a first speed and a first force to at least one reduction assembly;
   b. at least one two-stage reduction assembly comprising at least one input pulley (102) and at least one output pulley (110); said at least one two-stage reduction assembly configured to perform a speed reduction in said first speed and a force increment in said force received from said at least one motor;

   **characterized in that**
   said at least one motor (302), said at least one input pulley (102) and said at least one output pulley (110) are inside each other within said actuator.

2. The actuator according to claim 1, wherein said at least one motor (302), said at least one input pulley (102) and said at least one output pulley (110) are coaxially located and in the same plane within said actuator.

3. The actuator according to claim 1 or claim 2, wherein said at least one reduction assembly performs a reduction from about 1:10 to about 1:50.

4. The actuator according to any one of claims 1-3, wherein said at least one reduction assembly comprises:

   a. said at least one input pulley (102) and at least one additional pulley (106); said at least one input pulley (102) operably connected to said at least one motor (302);
   b. a first belt (104) positioned between said at least one input pulley (102) and said at least one additional pulley (106); said first belt (104) configured to transmit speed and force to said at least one additional pulley (106);
   c. said at least one output pulley (110);
   d. a second belt (108) positioned between said at least one additional pulley (106) and said at least one output pulley (110); said second belt (108) configured to transmit speed and force to said at least one output pulley (110).

5. The actuator according to claim 3, wherein said at least one additional pulley (106) is outside said at least one motor (302), said at least one input pulley (102) and said at least one output pulley (110) but on a same plane as said at least one motor (302), said at least one input pulley (102) and said at least one output pulley (110).

6. The actuator according to any one of claims 1-5, wherein said at least one input pulley (102) and said at least one additional pulley (106) provide a reduction of from about 1:3 to about 1:6.

7. The actuator according to any one of claims 1-6, wherein said at least one motor (302) is a high torque motor.

8. The actuator according to any one of claims 1-7, wherein said actuator is **characterized by** having a mid-low backdriving torque from about 0.5 Nm to about 2.5 Nm and is configured to provide high nominal torque from about 10 Nm to about 100 Nm.

9. The actuator according to any one of claims 1-8, wherein said at least one motor (302) and/or said reduction assembly are configured to allow said actuator to be backdriven.

10. The actuator according to any one of claims 1-9, wherein:

    a. said at least one reduction assembly does not comprise belts;
    b. said at least one input pulley (102) is an input gear that is meshed with at least one additional gear; and
    c. said at least one additional gear is meshed with an output gear.

11. The actuator according to any one of claims 1-10, further comprising at least one energy source configured for providing energy to said actuator.

12. The actuator according to any one of claims 1-11, further comprising at least one encoder (508a/508b) configured for providing real-time information about a position of said at least one input pulley **(102)** and said at least one output pulley **(110).**

13. The actuator according to any one of claims 1-12, further comprising at least one brake **(510)** configured for locking said actuator in case of emergency.

14. The actuator according to any one of claims 1-13, wherein said at least one motor **(302)** and said at least one two-stage reduction assembly are configured to provide said actuator with capabilities for delivering a maximum torque/weight ratio from about 40 Nm/Kg to about 100 Nm/Kg.

15. An exoskeleton, comprising:

a. at least one actuated applied part attached to one or more segments selected from the group consisting of thigh, shank, foot, trunk, forearm, upper arm and hand;
b. at least one actuator according to claim 1.
c. at least one circuit configured for controlling said at least one motor (302) of said at least one actuator.


**Patentansprüche**

1. Aktuator, umfassend:

a. wenigstens einen Motor (302) für das Vorsehen einer ersten Geschwindigkeit und einer ersten Kraft zu wenigstens einer Untersetzungsanordnung,
b. wenigstens eine zweistufige Untersetzungsanordnung, die wenigstens eine Eingangsscheibe (102) und wenigstens eine Ausgangsscheibe (110) umfasst, wobei die wenigstens eine zweistufige Untersetzungsanordnung konfiguriert ist zum Durchführen einer Geschwindigkeitsreduktion der ersten Geschwindigkeit und eines Kraftinkrements der Kraft, die von dem wenigstens einen Motor empfangen werden,

**dadurch gekennzeichnet, dass**:
der wenigstens eine Motor (302), die wenigstens eine Eingangsscheibe (102) und die wenigstens eine Ausgangsscheibe (110) ineinander in dem Aktuator angeordnet sind.

2. Aktuator nach Anspruch 1, wobei der wenigstens eine Motor (302), die wenigstens eine Eingangsscheibe (102) und die wenigstens eine Ausgangsscheibe (110) koaxial und in der gleichen Ebene in dem Aktuator angeordnet sind.

3. Aktuator nach Anspruch 1 oder 2, wobei die wenigstens eine Untersetzungsanordnung eine Reduktion von ungefähr 1:10 bis ungefähr 1:50 durchführt.

4. Aktuator nach einem der Ansprüche 1-3, wobei die wenigstens eine Untersetzungsanordnung umfasst:

a. die wenigstens eine Eingangsscheibe (102) und wenigstens eine zusätzliche Scheibe (106), wobei die wenigstens eine Eingangsscheibe (102) operativ mit dem wenigstens einen Motor (302) verbunden ist,
b. einen ersten Riemen (104), der zwischen der wenigstens einen Eingangsscheibe (102) und der wenigstens einen zusätzlichen Scheibe (106) angeordnet ist, wobei der erste Riemen (104) konfiguriert ist zum Übertragen einer Geschwindigkeit und einer Kraft zu der wenigstens einen zusätzlichen Scheibe (106),
c. die wenigstens eine Ausgangsscheibe (110),
d. einen zweiten Riemen (108), der zwischen der wenigstens einen zusätzlichen Scheibe (106) und der wenigstens einen Ausgangsscheibe (110) angeordnet ist, wobei der zweite Riemen (108) konfiguriert ist zum Übertragen einer Geschwindigkeit und einer Kraft zu der wenigstens einen Ausgangsscheibe (110).

5. Aktuator nach Anspruch 3, wobei die wenigstens eine zusätzliche Scheibe (106) außerhalb des wenigstens einen Motors (302), der wenigstens einen Eingangsscheibe (102) und der wenigstens einen Ausgangsscheibe (110), aber in der gleichen Ebene wie der wenigstens eine Motor (302), die wenigstens eine Eingangsscheibe (102) und die wenigstens eine Ausgangsscheibe (110) angeordnet ist.

6. Aktuator nach einem der Ansprüche 1-5, wobei die wenigstens eine Eingangsscheibe (102) und die wenigstens eine zusätzliche Scheibe (106) eine Reduktion von ungefähr 1:3 bis ungefähr 1:6 vorsehen.

**7.** Aktuator nach einem der Ansprüche 1-6, wobei der wenigstens eine Motor (302) ein Motor mit einem hohen Drehmoment ist.

**8.** Aktuator nach einem der Ansprüche 1-7, wobei der Aktuator **dadurch gekennzeichnet ist, dass** er ein mittleres bis niedriges Rückdrehmoment von ungefähr 0,5 Nm bis ungefähr 2,5 Nm aufweist und konfiguriert ist zum Vorsehen eines hohen Nenndrehmoments von ungefähr 10 Nm bis ungefähr 100 Nm.

**9.** Aktuator nach einem der Ansprüche 1-8, wobei der wenigstens eine Motor (302) und/oder die Untersetzungsanordnung konfiguriert sind, um einen Rückantrieb des Aktuators zu erlauben.

**10.** Aktuator nach einem der Ansprüche 1-9, wobei:

a. die wenigstens eine Untersetzungsanordnung keine Riemen umfasst,
b. die wenigstens eine Eingangsscheibe (102) ein Eingangszahnrad ist, das mit wenigstens einem zusätzlichen Zahnrad eingreift, und
c. das wenigstens eine zusätzliche Zahnrad mit einem Ausgangszahnrad eingreift-

**11.** Aktuator nach einem der Ansprüche 1-10, der weiterhin wenigstens eine Energiequelle, die für das Vorsehen von Energie zu dem Aktuator konfiguriert ist, umfasst.

**12.** Aktuator nach einem der Ansprüche 1-11, der weiterhin wenigstens einen Codierer (508a/508b), der für das Vorsehen von Echtzeitinformationen zu der Position der wenigstens einen Eingangsscheibe (102) und der wenigstens einen Ausgangsscheibe (110) konfiguriert ist, umfasst.

**13.** Aktuator nach einem der Ansprüche 1-12, der weiterhin wenigstens eine Bremse (510), die für das Sperren des Aktuators beim Auftreten eines Notfalls konfiguriert ist, umfasst.

**14.** Aktuator nach einem der Ansprüche 1-13, wobei der wenigstens eine Motor (302) und die wenigstens eine zweistufige Untersetzungsanordnung derart konfiguriert sind, dass der Aktuator ein maximales Drehmoment/Gewicht-Verhältnis von ungefähr 40 Nm/kg bis ungefähr 100 Nm/kg ausgeben kann.

**15.** Exoskelett, umfassend:

a. wenigstens einen betätigten Teil, der an einem oder mehreren Segmenten angebracht ist, die aus der Gruppe ausgewählt sind, die aus einem Oberschenkel, einem Unterschenkel, einem Fuß, einem Rumpf, einem Unterarm, einem Oberarm und einer Hand besteht,
b. wenigstens einen Aktuator gemäß dem Anspruch 1,
c. wenigstens einen Schalkreis, der konfiguriert ist zum Steuern wenigstens eines Motors (302) des wenigstens einen Aktuators.

**Revendications**

**1.** Actionneur comprenant

a. au moins un moteur **(302)** pour fournir une première vitesse et une première force à au moins un ensemble de réduction ;
b. au moins un ensemble de réduction à deux étages comprenant au moins une poulie d'entrée **(102)** et au moins une poulie de sortie **(110)** ; ledit au moins un ensemble de réduction à deux étages configuré pour effectuer une réduction de vitesse dans ladite première vitesse et une augmentation de force dans ladite force reçue dudit au moins un moteur ;

**caractérisé en ce que**
ledit au moins un moteur **(302),** ladite au moins une poulie d'entrée **(102)** et ladite au moins une poulie de sortie **(110)** se trouvent l'un dans l'autre à l'intérieur dudit actionneur.

**2.** Actionneur selon la revendication 1, dans lequel ledit au moins un moteur **(302),** ladite au moins une poulie d'entrée **(102)** et ladite au moins une poulie de sortie **(110)** sont situés coaxialement et dans le même plan à l'intérieur dudit actionneur.

3. Actionneur selon la revendication 1 ou la revendication 2, dans lequel ledit au moins un ensemble de réduction effectue une réduction d'environ 1:10 à environ 1:50.

4. Actionneur selon l'une quelconque des revendications 1 à 3, dans lequel ledit au moins un ensemble de réduction comprend :

a. ladite au moins une poulie d'entrée **(102)** et au moins une poulie supplémentaire **(106)** ; ladite au moins une poulie d'entrée **(102)** est reliée de manière opérationnelle audit au moins un moteur **(302)** ;
b. une première courroie **(104)** positionnée entre ladite au moins une poulie d'entrée **(102)** et ladite au moins une poulie supplémentaire **(106)** ; ladite première courroie **(104)** configurée pour transmettre la vitesse et la force à ladite au moins une poulie supplémentaire **(106)** ;
c. ladite au moins une poulie de sortie **(110);**
d. une seconde courroie **(108)** positionnée entre ladite au moins une poulie supplémentaire **(106)** et ladite au moins une poulie de sortie **(110)** ; ladite seconde courroie **(108)** configurée pour transmettre la vitesse et la force à ladite au moins une poulie de sortie **(110).**

5. Actionneur selon la revendication 3, dans lequel ladite au moins une poulie supplémentaire **(106)** est à l'extérieur dudit au moins un moteur **(302),** de ladite au moins une poulie d'entrée **(102)** et de ladite au moins une poulie de sortie **(110)** mais sur un même plan que ledit au moins un moteur **(302),** ladite au moins une poulie d'entrée **(102)** et ladite au moins une poulie de sortie **(110).**

6. Actionneur selon l'une quelconque des revendications 1 à 5, dans lequel ladite au moins une poulie d'entrée **(102)** et ladite au moins une poulie supplémentaire **(106)** assurent une réduction d'environ 1:3 à environ 1:6.

7. Actionneur selon l'une quelconque des revendications 1 à 6, dans lequel ledit au moins un moteur **(302)** est un moteur à couple élevé.

8. Actionneur selon l'une quelconque des revendications 1 à 7, dans lequel ledit actionneur est **caractérisé par** un couple de rétropropulsion moyen à faible d'environ 0,5 Nm à environ 2,5 Nm et est configuré pour fournir un couple nominal élevé d'environ 10 Nm à environ 100 Nm.

9. Actionneur selon l'une quelconque des revendications 1 à 8, dans lequel ledit au moins un moteur **(302)** et/ou ledit ensemble de réduction sont configurés pour permettre audit actionneur d'être entraîné à contre-courant.

10. Actionneur selon l'une quelconque des revendications 1 à 9, dans lequel :

a. ledit au moins un ensemble de réduction ne comprend pas de courroies ;
b. ladite au moins une poulie d'entrée **(102)** est un engrenage d'entrée qui est engrené avec au moins un engrenage supplémentaire ; et
c. ledit au moins un engrenage supplémentaire est engrené avec un engrenage de sortie.

11. Actionneur selon l'une quelconque des revendications 1 à 10, comprenant en outre au moins une source d'énergie configurée pour fournir de l'énergie à cet actionneur.

12. Actionneur selon l'une quelconque des revendications 1 à 11, comprenant en outre au moins un encodeur **(508a/508b)** configuré pour fournir des informations en temps réel sur la position de ladite au moins une poulie d'entrée **(102)** et de ladite au moins une poulie de sortie **(110).**

13. Actionneur selon l'une quelconque des revendications 1 à 12, comprenant en outre au moins un frein **(510)** configuré pour bloquer ledit actionneur en cas d'urgence.

14. Actionneur selon l'une quelconque des revendications 1 à 13, dans lequel ledit au moins un moteur **(302)** et ledit au moins un ensemble de réduction à deux étages sont configurés pour fournir à cet actionneur des capacités de fournir un rapport couple/poids maximal d'environ 40 Nm/Kg à environ 100 Nm/Kg.

15. Exosquelette comprenant

a. au moins une partie appliquée actionnée attachée à un ou plusieurs segments choisis dans le groupe constitué par la cuisse, le jarret, le pied, le tronc, l'avant-bras, le bras supérieur et la main ;
b. au moins un actionneur selon la revendication 1.
c. au moins un circuit configuré pour commander ledit au moins un moteur (302) dudit au moins un actionneur.

Figure 1a

Figure 1b

First Stage 1:4.33

106

104

110  102

108

Second Stage 1:3.85

**Figure 2**

First Stage Belt
1:4.33

106

102

104

108

110

Second Stage Belt
1:3.85

**Figure 3a**

106

104

110

Torque Motor

108  302

**Figure 3b**

Figure 4a          Figure 4b

**Figure 4c**

**Figure 5a**

**Hip Actuator**

Figure 5b

Figure 5c

508b

512

Input rotor

510

508a

Figure 5d

**Figure 6a**

**Figure 6b**

**Figure 6c**

**Figure 6d**

Figure 7

Figure 8a

Figure 8b

36

**Figure 9**

Figure 10

**Figure 11a**

**Figure 11b**

**Figure 11c**

**Figure 11d**

Figure 12a

Figure 12b

**Figure 13a**

**Figure 13b**

Figure 13c

**Figure 13d**

**Figure 13e**

**Figure 13f**

| Specifications AK10-9/V1.1 | | | |
|---|---|---|---|
| Weight (g) | 820 | Ke (V/rpm) | 0.01 |
| Voltage (V) | 24/48 | Km (Nm/√w) | 0.3 |
| Rated Torque (Nm) | 18 | Number of Pole-Pair | 21 |
| Peak Torque (Nm) | 54 | Resistance Phase to Phase (mΩ) | 90±5% |
| Max Speed @ Rated Torque (rpm) | 222/445 (output) | Inductance Phase to Phase (uH) | 331±10% |
| Rated Current (A) | 22 | OD (mm) | φ98 |
| Peak Current (A) | 68 | Height (mm) | 62.5 |
| Kt (Nm/A) | 0.095 | Max torque weight ratio (Nm/Kg) | 65 |
| Kv (RPM/V) | 100 | Reduction ratio | 9:1 |

Figure 13g

Resistance motor

Mechanical connexion

Motor tested

Figure 13h

Figure 13i

Figure 13j

Figure 13k

Figure 13l

Figure 13m

**Figure 13n**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10702441 B2
- US 20210290470 A1
- US 20210338515 A1
- WO 2013140390 A1
- US 9566705 B2
- JP 6765989 B
- KR 101724884 B1
- US 10213357 B2
- US 20210085552 A1
- US 20210275382 A1
- US 20210039248 A1
- US 20200276698 A1
- WO 2013188868 A1
- US 2018296422 A1
- WO 2021030086 A1

### Non-patent literature cited in the description

- **JAN BABIC et al.** *Challenges and solutions for application and wider adoption of wearable robots*
- **JUNLIN WANG et al.** *Comfort-Centered Design of a Lightweight and Backdrivable Knee Exoskeleton*
- **ALEJANDRO F. AZOCAR et al.** *Design and clinical implementation of an open-source bionic leg*
- **CHANG LIU et al.** *Functional Evaluation of a Force Sensor-Controlled Upper-Limb Power-Assisted Exoskeleton with High Backdrivability*
- **SHUANGYUE YU et al.** *Quasi-Direct Drive Actuation for a Lightweight Hip Exoskeleton with High Back-drivability and High Bandwidth*